(19) **Europäisches Patentamt**

**European Patent Office**

**Office européen des brevets**

(11) Veröffentlichungsnummer: **0 228 638 B1**

(12) # EUROPÄISCHE PATENTSCHRIFT

(45) Veröffentlichungstag der Patentschrift: **15.02.95**

(21) Anmeldenummer: **86117355.7**

(22) Anmeldetag: **12.12.86**

(51) Int. Cl.⁶: **C08F 2/10**, B01J 19/22

(54) **Verfahren und Vorrichtung zum kontinuierlichen Herstellen von Polymerisaten und Copolymerisaten von wasserlöslichen Monomeren.**

(30) Priorität: **18.12.85 DE 3544770**

(43) Veröffentlichungstag der Anmeldung:
**15.07.87 Patentblatt 87/29**

(45) Bekanntmachung des Hinweises auf die Patenterteilung:
**15.02.95 Patentblatt 95/07**

(84) Benannte Vertragsstaaten:
**AT BE CH DE ES FR GB IT LI NL SE**

(56) Entgegenhaltungen:
**DE-A- 752 639**
**DE-A- 1 915 903**

(73) Patentinhaber: **Chemische Fabrik Stockhausen GmbH**
**Bäkerpfad 25**
**D-47805 Krefeld (DE)**

(72) Erfinder: **Chmelir, Miroslav, Dr. Dipl.-Chem.**
**Grönkesdyk 36**
**D-4150 Krefeld (DE)**
Erfinder: **Pauen, Josef**
**Tupsheide 10**
**D-4154 Willich 3 (DE)**

(74) Vertreter: **Klöpsch, Gerald, Dr.-Ing. Patentanwalt**
**An Gross St. Martin 6**
**D-50667 Köln (DE)**

## Beschreibung

Die Erfindung betrifft ein Verfahren zum kontinuierlichen Herstellen von Polymerisaten und Copolymerisaten von wasserlöslichen Monomeren, insbesondere säuregruppenhaltigen Monomeren, wie Acrylsäure, Methacrylsäure, Acrylamidopropansylfonsäure, durch Polymerisieren einer wässrigen Monomerenlösung enthaltend 2,2 bis 8,3 Mole polymerisationsfähiger Doppelbindungen pro Kilo Monomerenlösung, sowie ggfs. Katalysatoren und/oder Photoinitiatoren in einem Temperaturbereich von etwa -10 bis 120° C, wobei die flüssigen Reaktionskomponenten als mindestens 1 cm dicke Schicht auf ein bewegliches endlos umlaufendes Trägerband aufgetragen und polymerisiert werden. Die Erfindung betrifft desweiteren eine Vorrichtung mit einem endlos umlaufenden Trägerband zum Durchführen des Verfahrens.

Es ist seit langem bekannt, wasserlösliche Monomere, wie Acrylmonomere in verdünnter wässriger Lösung zu polymerisieren, um die Polymerisate in Form von Gelen zu erhalten, die anschließend getrocknet und pulverisiert werden. Die chemischen Reaktionen (Polymerisation) werden hierbei bei kontinuierlichen Verfahren auf einem Trägerband in einer dünnen Schicht oder in auf einem beweglichen Trägerband befestigten Behältern diskontinuierlich portionsweise durchgeführt.

Die Lösungspolymerisation solcher wasserlöslicher Monomeren, z.B. von Acrylsäure verläuft üblicherweise in einem Temperaturbereich von 20 bis 100° C. Die chemische Reaktivität der Monomeren, vor allem bei höheren Temperaturen, führt dazu, daß praktisch jedes Material früher oder später von der Acrylsäure angegriffen wird und das Polymergel auf diesem Material fest haftet. Das Ankleben des Polymergels wird noch stärker, wenn die Polymerisation schnell verläuft und dadurch wenig Zeit zur Abkühlung und Abführen der Reaktionswärme und Volumenkontraktion des Polymergels vorhanden ist.

Es sind nun eine Reihe von Verfahren zum Herstellen von Polymerisaten und Co-Polymerisaten aus wasserlöslichen Monomeren, z.B. Acrylsäure oder Methacrylsäure bekannt, die jeweils in der einen oder anderen Sicht nicht befriedigen können.

Bei dem Verfahren und Vorrichtung nach der DE-OS 20 59 241 werden mit einem Gliederbandförderer Kästen verschiedener Form und Höhe, von 2 bis 200 Liter Fassungsvermögen, mit der Monomerlösung und den Katalysatorlösungen taktweise aus einer Abfüllanlage über eine Mischvorrichtung mit Hilfe von Dosierpumpen abgefüllt. Hierbei kann eine Monomerlösung auch in höherer Schichtdicke polymerisiert werden, jedoch verliert man die Vorteile der Herstellung eines endlosen Polymergelstranges. Die Kästen können aus einem thermoplastischen Kunststoff oder aus anderen Materialien z.B. Metall sein, die auf der Innenseite mit einem thermoplastischen Kunststoff beschichtet oder belegt sind. Das Gewicht des Polymergels muß in diesem Teil so gewählt werden, daß die Kontaktfläche A zwischen der Gelmasse und der Innenwand des Kastens die Klebkraft F und das Gelgewicht W folgende Beziehung (siehe DE-AS 24 21 076) erfüllen:

$$W > A \cdot F.$$

Auch bei Erfüllung dieser Bedingung verbleiben trotzdem in den Kästen, verursacht durch die hohe Klebrigkeit des Polymergels, immer noch kleine Reste des Polymergels, die beseitigt werden müssen. Die Reinigung der einzelnen Kästen ist bei diesem Verfahren sehr mühsam und nimmt viel Zeit in Anspruch, da eine kontinuierliche Reinigung mit Walzenbürste nicht möglich ist. Man hat auch schon zur Erleichterung der Entleerung des Polymergels aus den Kästen die Form der Polymerisationsgefäße angepaßt, eine bevorzugte Form ist in der DE-OS 28 24 313 als stumpfer Kegel, Halbkugel oder stumpfe Pyramide angeführt.

Neben den Gliederbandförderern mit Behältern sind auch Endlosbandanlagen mit endlos umlaufenden flachen Transportbändern zur Durchführung der Polymerisation bekannt. Eine mit Redox-System katalysierte Polymerisation von wasserlöslichen Polymeren auf einem endlosen Transportband ist bspw. in der US-PS 4,138,539 beschrieben. Dabei wird die Monomerlösung mit Azoisobutyronitril und mit Eisenammoniumsulfat vermischt und mit einer Dosiergeschwindigkeit von 2 kg/min auf das Band gespritzt. Bei einer Bandgeschwindigkeit von 1 foot/88 sec beträgt die Gesamtpolymerisationszeit 65 min. Die Polymerisation kann auch durch Licht initiiert werden, Bestrahlung mit Quecksilberdampf-oder Xenonlampen sowie Leuchtstoffröhren, die energiereiches Licht abgeben, wie dies in den DE-OS 20 50 988 oder DE-OS 20 09 748 beschrieben wird. Bei diesen Verfahren fließt die Monomerlösung meistens mit gelöstem Photoinitiator über eine Auftragsvorrichtung auf ein endloses Stahlband oder auf ein Transportband mit einem Träger aus einem wasserabstoßenden Material, bspw. Fluorpolyolefinpolymerisaten und Copolymerisaten, metallbeschichteten Kunststoffolien, die das Abkratzen des getrockneten Polymerisats erlauben.

Bei der Herstellung einer Emulsion eines wasserlöslichen Polymerisats durch UV-Licht auf einem bewegten Transportband werden Schichtdicken von 10 bis 50 mm angewendet, wobei eine dickflüssige Polymeremulsion als Endprodukt resultiert, wie bspw. in der DE-OS 32 08 369 beschrieben.

Soweit die Herstellung von Polymerisaten, z.B. (Meth-)Acrylsäurepolymeren, auf einem endlosen Trägerband durchgeführt wird, weisen die bekannten Konstruktionen der verwendeten Trägerbänder mit Umlenkrollen und ggfs. Spannvorrichtung keine ausgeprägte Muldenform auf, die eine hohe Schichtdicke der aufgebrachten Monomerlösung zulassen würden. Auch durch das relativ niedrige Gewicht der flüssigen in nur dünner Schicht aufgetragenen Reaktionskomponenten wird keine Muldenform des Transportbandes ausgeprägt. Durchsatz und Raum-Zeit-Ausbeuten für das herzustellende Polymere sind daher bei den bekannten kontinuierlichen Verfahren relativ niedrig. Tatsächlich werden in den meisten Fällen nur Schichtdicken der Monomerlösung auf den endlosen Transportbändern zum Polymerisieren von 0,5 bis max. 2 cm angegeben, siehe DE-OS 25 45 290, DE-OS 27 16 606, DE-AS 10 32 922, US-PS 3,929,751, DE-AS 22 48 715, DE-OS 20 50 988 und DE-OS 35 06 534.

Lediglich in der DE-OS 32 46 905 wird für die Herstellung von Methacrylamidpolymerisaten auf einer wärmeregulierbaren Unterlage (zum Kühlen) mit einer Trennfolie auf einer endlosen Bandanlage eine mögliche Schichtdicke von 1 bis 10 cm bei einer Polymerisationszeit von 1 bis 24 Std. und einer nachfolgenden Lagerzeit des Polymergels von 10 bis 50 Std. angegeben. Es sind jedoch keinerlei Konstruktionsmerkmale über die Bandanlage, die eine so dicke Schicht der flüssigen Reaktionskomponenten aufnehmen kann, erwähnt. Bei einer solch dicken Schicht der Reaktionslösung ist in allen Richtungen eine Abdichtung gegen das Herablaufen bzw. Zurücklaufen der Reaktionslösung erforderlich. Soweit den Beispielen zu entnehmen ist, zeigen auch die Reaktionszeiten von 2 Std. für eine 2 cm Schicht und offensichtlich entsprechend längere Zeiten (bis zu 24 Std.) für größere Schichtdicken, daß die Raum-Zeit-Ausbeute bei diesem Polymerisationsverfahren recht niedrig ist.

Um die Klebrigkeit der entstehenden Polymergele an den Wänden von Polymerisationsgefäßen, wie bei den eingangs beschriebenen Gliederbandförderern, entgegenzuwirken, wurde bereits versucht, mit Zusatz eines thermisch zerfallenden Radikalbildners, siehe DE-OS 22 48 715, oder durch Zusatz von höheren aliphatischen Säuren und ihren Salzen, Laurin-, Myristin-, Palmitin-, Stearin-, Arachin- oder Behensäure gemäß DE-OS 28 24 313 oder DE-AS 27 47 168 zu arbeiten.

In der DE-A 752 639 wird eine Vorrichtung zur Durchführung chemischer Reaktionen beschrieben, bei denen dem Reaktionsgut Wärme zugeführt wird und bei denen sich fest zusammenbackende Massen bilden. Bei dieser Vorrichtung wird ein endloses Trägerband verwendet, bei dem die Beschickung an einer Stelle erfolgt, an der das Trägerband muldenförmig ausgebildet ist und wobei sich das Trägerband von der gekrümmten Form in die gestreckte Bandform verändert. In der DE-A 1 915 903 wird ein Polymerisationsverfahren beschrieben, bei dem die Lösung des Monomeren und einem Katalysator in Form eines dünnen Films oder einer dünnen Schicht auf eine Unterlage aufgebracht und diese Schicht bis zum Einsetzen der Polymerisation erwärmt wird. Gemäß einer bevorzugten Ausführungsform wird das Verfahren in einem geschlossenen System durchgeführt, wobei dann für die Herstellung des Films oder der Schicht des Reaktionsgemisches Schalen verwendet werden, deren Oberflächen mit Polytetrafloręthylen beschichtet sein können.

Der Erfindung liegt die Aufgabe zugrunde, das kontinuierliche Verfahren zum Herstellen von Polymerisaten oder Copolymerisaten von wasserlöslichen Monomeren durch Polymerisation auf endlosen Transportbändern in bezug auf eine sehr hohe Raum-Zeit-Ausbeute für das Polymere und eine Herabsetzung des Umfangs des Anklebens des Polymergels auf dem Trägerband zu verbessern und wirtschaftlicher zu gestalten.

Diese Aufgabe wird erfindungsgemäß gelöst durch ein Verfahren zum kontinuierlichen Herstellen von Polymerisaten und Copolymerisaten von wasserlöslichen Monomeren ggf. mit weiteren Comonomeren durch Polymerisieren einer wäßrigen Monomerenlösung enthaltend 2,2-8,3 Mole polymerisationsfähiger Doppelbindungen pro Kilo Monomerenlösung sowie ggf. Katalysatoren und/oder Photoinitiatoren in einem Temperaturbereich von etwa -10 bis 120 °C, wobei die flüssigen Reaktionskomponenten als mindestens 1 cm dicke Schicht auf ein bewegliches, endlos umlaufendes Trägerband aufgetragen und polymerisiert werden, das dadurch gekennzeichnet ist, daß die flüssigen Reaktionskomponenten in eine von dem Trägerband fortlaufend gebildete Mulde eingebracht werden und während der Polymerisation der Reaktionskomponenten die Muldenform des Trägerbandes kontinuierlich in eine gestreckte ebene Bandform überführt wird und der entstehende Polymergelstrang, ausgehend von den Seitenrändern hin zur Mitte der von dem Trägerband gebildeten Mulde sich fortlaufend beim Überführen der gekrümmten Muldenform des Trägerbandes in die gestreckte ebene Bandform ablöst, wobei das Ablösen unter der Bedingung Kraft P größer A • F (Kontaktfläche x Klebkraft) erfolgt, wobei die flüssigen Reaktionskomponenten auf eine mit dem Trägerband mitgeführte Trennfolie aus einem Kunststoff, wie z.B. Polyolefin (Polyethylen, Polypropylen, Polyisobutylen), Polyvinylchlorid, Tri- oder Tetrafluorethylen, Polyamid, Natur-, Silikon- oder synthetischem Kautschuk, Polyesterharz oder imprägniertem Textilgewebe oder Folien auf Cellulosebasis wie Cellophan, imprägnierte Papiere, nicht stark saugfähige Papiere, aufgebracht werden.

Alternativ wird die Aufgabe gelöst durch ein Verfahren zum kontinuierlichen Herstellen von Polymerisaten und Copolymerisaten von wasserlöslichen Monomeren ggf. mit weiteren Comonomeren durch Polymerisieren einer wäßrigen Monomerenlösung enthaltend 2,2-8,3 Mole polymerisationsfähiger Doppelbindungen pro Kilo Monomerenlösung sowie ggf. Katalysatoren und/oder Photoinitiatoren in einem Temperaturbereich von etwa -10 bis 120 °C, wobei die flüssigen Reaktionskomponenten als mindestens 1 cm dicke Schicht auf ein bewegliches, endlos umlaufendes Trägerband aufgetragen und polymerisiert werden, das dadurch gekennzeichnet ist, daß die flüssigen Reaktionskomponenten in eine von dem Trägerband fortlaufend gebildete Mulde eingebracht werden und während der Polymerisation der Reaktionskomponenten die Muldenform des Trägerbandes kontinuierlich in eine gestreckte ebene Bandform überführt wird und der entstehende Polymergelstrang, ausgehend von den Seitenrändern hin zur Mitte der von dem Trägerband gebildeten Mulde sich fortlaufend beim Überführen der gekrümmten Muldenform des Trägerbandes in die gestreckte ebene Bandform ablöst, wobei das Ablösen unter der Bedingung P größer A • F erfolgt, wobei ein Trägerband verwendet wird, dessen zumindest oberste mit den Reaktionskomponenten in Berührung kommende Schicht aus Silikonkautschuk hergestellt ist.

Mit der Erfindung wurde eine Lösung gefunden, die das Ankleben des Polymergels unter Verwendung eines endlosen Trägerbandes wesentlich verringert oder sogar eliminiert, und eine kontinuierliche Polymerisation der Acrylsäure bzw. Methacrylsäure in relativ dicker Schicht und kurzer Zeit ermöglicht, und bei der zugleich eine hohe Raum-Zeit-Ausbeute bei einer Umsetzung von mehr als 98%, vorzugsweise mehr als 99% erzielt werden kann. Durch das erfindungsgemäß vorgeschlagene Ändern der Muldenform des Trägerbandes noch im Verlaufe der Polymerisation wird das Ankleben des sich bildenden Polymergels verhindert bzw. erheblich reduziert. Zugleich kann das Ablösen des sich bildenden Polymergels von der Oberfläche des Trägerbandes allmählich von den seitlichen Rändern zur Mitte hin erfolgen und zwar noch während des Polymerisationsvorganges entsprechend der sich kontinuierlich ändernden, d.h. sich wieder in den flachen Zustand streckenden Muldenform des Trägerbandes.

Das erfindungsgemäße Verfahren betrifft in erster Linie die Polymerisation von Acrylsäure und Methacrylsäure alleine als Homopolymerisat oder als Copolymerisat, ferner aber auch die Polymerisation von anderen wasserlöslichen Monomeren außer Acrylsäure und Methacrylsäure, wie Acrylamid, Methacrylnitril und Acrylnitril, Vinylpyridin, Vinylacetat sowie weitere wasserlösliche Monomere wie polymerisationsfähige Säuren und ihre Salze, insbesondere die Malein-, Fumar-, Itacon-, Vinylsulfon- oder Acrylamidopropansulfonsäure; ferner hydroxygruppenhaltige Ester polymerisationsfähiger Säuren, insbesondere die Hydroxyethyl- und Hydroxypropylester der Acryl- und der Methacrylsäure verwendet werden können; weiter aminogruppenhaltige und ammoniumgruppenhaltige Ester und Amide polymerisationsfähiger Säuren wie die Dialkylaminoester, insbesondere die Dimethyl- und die Diethylaminoalkylester der Acryl- und der Methacrylsäure, sowie die Trimethyl- und die Triethylammoniumalkylester sowie die entsprechenden Amide. Ferner können in geringen Anteilen vernetzende Monomeren wie z.B. Monomere mit mehr als einer polymerisationsfähigen Gruppe im Molekül polymerisiert werden.

Die vorstehenden Monomeren können allein zu Homo- oder untereinander oder zu Copolymerisaten polymerisiert werden. Bei der Verwendung von Acrylsäure und/oder Methacrylsäure als wasserlöslichen Monomeren werden bei der Herstellung von Copolymerisaten die vorstehend aufgeführten wasserlöslichen Monomeren bevorzugt.

In geringen Mengen können noch wasserunlösliche Monomere copolymerisiert werden wie die Ester der Acryl- und/oder Methacrylsäure mit $C_1$-$C_{10}$-Alkoholen, Styrol und alkylierte Styrole. Im allgemeinen liegt der Anteil an den wasserlöslichen Monomeren bei 40 bis 100 Gew.-%, bezogen auf die Gesamtheit der Monomeren. Der Anteil an den vernetzenden Comonomeren liegt bei 0 bis 20 Gew.-%, vorzugsweise bei 0,01 bis 2,0 Gew.-%, bezogen auf die Gesamtheit der Monomeren. Die wasserunlöslichen (hydrophoben) Monomeren machen in der Regel 0 bis 40 Gew.-% der Monomeren aus.

Als vernetzende Monomere seien bi- oder mehrfunktionelle Monomere, z.B. Amide wie das Methylenbisacryl- bzw. -methacrylamid oder Ethylenbisacrylamid, ferner Ester von Polyolen, wie Diacrylate oder Triacrylate z.B. Butandiol- oder Ethylenglykoldiacrylat, bzw. -methacrylat, Trimethylolpropantriacrylat, ferner Vinylmethacrylat und Allylverbindungen wie Allyl(meth)acrylat, Triallylcyanurat, Maleinsäurediallylester, Polyallylester, Tetraallyloxiethan, Triallylamin, Tetraallylethylendiamin, Allylester der Phosphorsäure bzw. phosphorigen Säure, ferner vernetzungsfähige Monomere, wie die N-Methylolverbindungen von Amiden wie dem Methacrylamid bzw. Acrylamid und die davon abgeleiteten Äther.

Die Polymerisation kann durch chemische Katalyse und/oder durch energiereiche Strahlung/Licht (z.B. UV-Licht) initiiert werden. Als geeignete Katalysatoren können z.B. Perverbindungen wie Kaliumpersulfat, Wasserstoffperoxid, organische Peroxide wie Benzoylperoxid, tert. Butylperpivalat, Redox-Systeme wie z.B. Kaliumpersulfat-Natriumdisulfit, Wasserstoffperoxid-Hydroxylaminchlorid oder Azoinitiatoren wie AIBN (2,2′-Azobis(isobutyronitril)) oder ABAH (2,2′-Azobis (2-amidinopropan)-dihydrochlorid) verwendet werden. Als Photoinitiatoren können z.B. Benzoin und seine Derivate, z.B. Benzoinether wie Benzoin-Ethyl-Propyl-Ether und Benzil und seine Derivate, wie Benzilketale oder Acryldiazoniumsalze, Acetophenonderivate und viele andere alleine oder in Gemischen und/oder auch in Gemischen mit perhaltigen Katalysatorsystemen oder Azoinitiatoren verwendet werden. Im allgemeinen liegt der Gehalt an Photoinitiatoren bei 0,002 bis 2,0 Gew.-%, vorzugsweise 0,01 bis 0,2 Gew.-%, bezogen auf die eingesetzten Monomeren. Der Gehalt an Katalysatoren liegt im allgemeinen bei 0,02 bis 5,0 Gew.-%, vorzugsweise zwischen 0,20 bis 2,0 Gew.-% bezogen auf die Monomeren.

Das erfindungsgemäße Verfahren wird in einer wässrigen Lösung enthaltend das wasserlösliche Monomere und eventuell die Comonomeren in einer Konzentration von 2,2 bis 8,3 Mole polymerisationsfähiger Doppelbindungen pro Kilo Monomerenlösung, insbesondere 3,5 bis 6,25 Mole (entsprechend 16-60, insbesondere 25-45 Gew.-% Acrylsäure als Monomeres) und im Temperaturbereich von etwa -10 bis 120 °C ausgeführt. Die Polymerisation der Lösung auf dem endlosen Trägerband kann innerhalb von 10 bis 60 min., bevorzugt innerhalb von 10 bis 30 min. durchgeführt werden, wodurch eine sehr hohe Raum-Zeit-Ausbeute erreicht wird.

Beispielsweise bei einem Band von 1,20 m Breite, einer Länge von 20 m und einer Schichtdicke von 10 cm kann, bei einer Laufgeschwindigkeit des Trägerbandes von 65 bis 80 cm/min, und Reaktionszeiten von 25 bis 30 min., ein Polymergelstrang von 55 bis 68 kg/min (3300 bis 4080 kg/h) hergestellt werden.

Bei einer bevorzugten Verfahrensdurchführung wird der pH-Wert der Monomerlösung in einem Bereich unter 10, bevorzugt zwischen 2 bis 7 und besonders bevorzugt zwischen 3,5 und 5 gewählt.

Die Monomerlösung wird bevorzugt kontinuierlich in die von dem Trägerband gebildete Mulde eingespeist, wobei die Katalysator- und/oder Photoinitiatorlösungen entweder kurz vor dem Austritt der Monomerlösung mit dieser vereinigt werden oder separat zu dieser in die Mulde auf das Trägerband gegeben und dabei vermischt werden. Die Monomerlösung wird bevorzugt kontinuierlich in einer solchen Menge dosiert, daß sie zu einer Schichtdicke von mindestens 2 cm, bevorzugt mehr als 6 cm in der Mulde aufgetragen wird und der sich bildende Polymergelstrang während der Polymerisation die Form der Mulde annimmt. Die Schichtdicke der aufgetragenen Monomerlösung wird begrenzt von den Abmessungen des Trägerbandes bzw der geformten Mulde und sie ist auch abhängig von der Art der Polymerisation.

Die Viskosität der Reaktionslösung, d.h. der Monomerenlösung, kann durch Zusatz von Verdickungsmitteln auf Natur- und/oder synthetischer Basis, wie Alginate, Carboxymethylcellulose, Polyvinylalkohol, hochmolekulare Polymere auf Basis der Acrylsäurederivate, wie Mono- und Copolymerisate von Acrylamid, Acrylsäure, Acrylnitril, oder des Ethylenoxids beeinflußt werden. Bevorzugt wird eine Monomerlösung mit Viskositäten (gemessen mit Brockfield Viskosimeter bei 20 Upm) im Bereich von 5 bis 5000 mPa.s und besonders bevorzugt von 10 bis 200 mPa.s verwendet. Mit dem Verdickungsmittelzusatz kann die Viskosität der flüssigen Reaktionskomponenten der Transportgeschwindigkeit des Trägerbandes so angepaßt werden, daß nur ein begrenzter oder sogar kein Rücklauf der Reaktionskomponenten auf dem Trägerband bei einer gewünschten Schichtdicke der aufgetragenen Monomerlösung stattfinden kann.

Für das Ablösen des sich bildenden Polymergelstranges von dem Trägerband ist die kontinuierliche Änderung der Muldenform des Trägerbandes von wesentlicher Bedeutung. Darüber hinaus ist jedoch auch das Minimieren des Verklebens bzw. Anklebens, d.h. der Klebehaftung des Polymergelstranges an dem Trägerband sehr wichtig. Das endlos umlaufende Trägerband sollte zumindest in Teilbereichen biegsam zur Anpassung an die gewünschte Muldenform während der Polymerisationsphase ausgebildet sein. Das Trägerband kann aus verschiedenen Materialien gefertigt werden, die jedoch die Anforderungen einer hohen Zugfestigkeit und Biegsamkeit, Biegewechselfestigkeit, gute Verformbarkeit und chemische Resistenz gegen die einzelnen Reaktionskomponenten bei den Polymerisationsbedingungen erfüllen müssen. Diese Anforderungen werden nur selten von einem einzigen Material erfüllt, insbesondere im Hinblick auf die chemische Resistenz, so daß bevorzugt ein mehrschichtiges Material für die Ausbildung des Trägerbandes verwendet wird. Den mechanischen Anforderungen wird bspw. mit einem Metallband (Stahlband) oder Gummigurt mit Gewebeeinlagen aus natürlichen und/oder synthetischen Fasern oder Glasfasern oder diversen Stahlseilen Rechnung getragen, wobei die chemische Resistenz durch Außenschichten aus Materialien wie Polyolefinen, z.B. Polyethylen, Polypropylen, Polyisobutylen, aus halogenierten Polyolefinen wie Polyvinylchlorid, Tri- oder Tetrafluorethylen oder aus Polyamid, Natur- oder synthetischem Kautschuk, Polyesterharz, Epoxidharz erreicht werden kann.

Für das erfindungsgemäße Verfahren wurde gefunden, daß die meisten Kunststoffe keine vollständige Resistenz gegenüber der bei den Reaktionsbedingungen stark aggressiven wässrigen Monomerenlösungen, insbesondere Acrylsäure, Methacrylsäure und/oder Acrylamidopropansulfonsäure haben, um das Ankleben des Polymergelstranges auf dem Trägerband zu verhindern, besonders wenn die Polymerisation bei einem pH-Wert unter 7 durchgeführt wurde. Diese Materialien sind als die äußere chemisch resistente Schicht des Trägerbandes dann ausreichend geeignet, wenn sie in Form einer von dem Trägerband getrennten Schicht, als Trennfolie für einmalige Verwendung benutzt werden. Dabei kann in weiterer Ausgestaltung des erfindungsgemäßen Verfahrens eine mitgeführte Trennfolie auf Cellulose- oder Kunststoffbasis mit dem darauf erzeugten Polymergelstrang gemeinsam weiter verarbeitet und damit zum Bestandteil des hergestellten Polymerisats gemacht werden. Erfindungsgemäß wurde gefunden, daß lediglich eine Schicht aus Silikonkautschuk als mit den Reaktionskomponenten in Berührung kommende Schicht des Trägerbandes ausreichend chemisch resistent ist und für einen Dauerbetrieb benutzbar ist, da das Ankleben des Polymergelstranges sich in solchen Grenzen hält, die das Ablösen desselben nicht behindern. Dies bietet Vorteile vor allem, wenn der pH-Wert der Monomerlösung kleiner als 10 ist, und besonders, wenn der pH-Wert in einem Bereich zwischen 2 und 7 liegt.

Das Ablösen des Polymergelstranges von der äußeren Schicht des Trägerbandes wird durch die kontinuierliche Änderung der Muldenform des Trägerbandes wesentlich beeinflußt und erleichtert. Erfindungsgemäß werden zur Ausbildung der Muldenform die Seitenränder des Trägerbandes in Längserstreckung desselben vor dem Bereich des Eindosierens der Reaktionskomponenten aus der horizontalen Ebene nach oben gebogen. Die Monomerlösung wird dann in die relativ tiefe Mulde eindosiert, und das entstehende Polymergel nimmt während der Polymerisation diese Form an. Für die Muldenbildung ist in einer weiteren Ausgestaltung der Erfindung vorgesehen, daß das Niveau des Trägerbandes im Bereich der Muldenbildung, insbesondere im Aufgabebereich der Reaktionskomponenten gegenüber dem vorangehenden Niveau des zulaufenden ebenen Trägerbandes abgesenkt wird. Damit ist ein Herauslaufen der Monomerenlösung, auch ein Zurücklaufen verhinderbar. Eine andere Möglichkeit der Verhinderung des Zurücklaufens der Monomerenlösung auf dem Trägerband kann in der Weise vorgesehen werden, daß die Mulde des Trägerbandes in Transportrichtung vor dem Bereich des Aufgebens der Monomerenlösung abgedichtet wird. Damit wird auch das Erzielen einer hohen Schicht der Reaktionskomponenten gewährleistet. Während der Polymerisation wird das Polymergel fester und gleichzeitig im weiteren Verlauf des weiter bewegten Trägerbandes wird die Mulde wieder kontinuierlich in die Bandform übergeführt, so daß zunächst das Ablösen des Polymergelstranges längs der Ränder linienförmig erfolgen kann. Erst am Ende des Polymerisationsvorganges wird dann der Polymergelstrang im Bodenbereich, d.h. im Bereich der Mitte des Trägerbandes von diesem abgelöst.

Für das Ablösen des Polymergelstranges von der Oberfläche des Trägerbandes bzw. einer mit dem Trägerband mitgeführten Trennfolie gilt für die Erfindung eine analoge Beziehung, wie sie bereits in der DE-OS 20 59 241 erwähnt wurde, jedoch mit dem Unterschied, daß anstelle des Gelgewichtes W zur Überwindung der Haftung die Kraft P eingesetzt werden muß, mit der das biegsame Trägerband von der gekrümmten Muldenform in den flachen gestreckten Zustand zurückgeführt wird. Diese Kraft P ist voraussichtlich viel kleiner als das Gewicht W des Polymergels, das sich in einem in der DE-OS 20 59 241 beschriebenen Kasten mit vergleichbarer Breite wie der des endlosen Trägerbandes befindet. Dennoch wird die für das Ablösen des Polymergelstranges notwendige Bedingung P größer A • F erfindungsgemäß erfüllt, denn bei angenommener konstanter Klebkraft F ist die Kontaktfläche A durch das allmähliche und kontinuierliche Abrollen des Trägerbandes auf ein Minimum beschränkt.

Der entstandene Polymergelstrang wird von dem Trägerband als ein zusammenhängender Strang mit weicher bis halbfester Konsistenz abgenommen und der weiteren Verarbeitung, wie Trocknung oder dergl. zugeführt.

Die Erfindung betrifft ferner eine Vorrichtung zur Durchführung des Verfahrens gemäß einem der Ansprüche 1 bis 17, mit einem endlosen über Trägerelemente und mindestens zwei Umlenkrollen, von denen mindestens eine angetrieben und eine verstellbar ausgebildet ist, umlaufenden Trägerband und einer Aufgabe- und Dosiereinrichtung für die Reaktionskomponenten, sowie ggfs. Belichtungseinrichtung, die in Transportrichtung des Trägerbandes nach der Aufgabe- und Dosiereinrichtung angeordnet sind, Kühl- und Heizeinrichtungen und einer Abnahmeeinrichtung für den Polymergelstrang, die im Bereich der Umlenkrollen für das Rückführen des Trägerbandes angeordnet ist, die dadurch gekennzeichnet ist, daß im Bereich des oberen Trums (21) des Trägerbandes (2) beidseitig der horizontalen Tragelemente (11), (120), beginnend im Bereich der Aufgabe- und Dosiereinrichtung (1), hochragende Stützelemente (14) vorgesehen sind, deren Längsachsen (140) einander in einem unterhalb des oberen Trums (21) liegenden Schnittpunkt schneiden, und das aufliegende Trägerband entsprechend muldenförmig verformt ist, wobei die Gestalt und Anordnung der Stützelemente (14) längs des oberen Trums (21) eine kontinuierliche Änderung der Muldenform der zu durchlaufenden Wegstrecke in der Weise bestimmen, daß das Ablösen des entstehenden klebrigen Polymerstranges vom Trägerband auf der vorgesehenen Wegstrecke, ausgehend von den Seitenrändern hin zur Mitte der vom Trägerband gebildeten Mulde, durch kontinuierliche Änderung der Muldenform unter der Bedingung P größer A x F erfolgt und wobei mindestens die oberste mit den Reaktionskomponenten in Berührung kommende Schicht des Trägerbandes aus Silikonkautschuk hergestellt ist.

Eine andere Vorrichtung zur Durchführung des gleichen Verfahrens gemäß einem der Ansprüche 1 bis 17, mit einem endlosen über Trägerelemente und mindestens zwei Umlenkrollen, von denen mindestens eine angetrieben und eine verstellbar ausgebildet ist, umlaufenden Trägerband und einer Abwicklungs- und Zuführeinrichtung für eine auf der Oberseite des Trägerbandes streckenweise mitführbaren Trennfolie, und einer Aufgabe- und Dosiereinrichtung für die Reaktionskomponenten, und einer Aufgabe- und Dosiereinrichtung für die Reaktionskomponenten, sowie ggfs. Belichtungseinrichtung, die in Transportrichtung des Trägerbandes nach der Aufgabe- und Dosiereinrichtung angeordnet sind, Kühl- und Heizeinrichtungen und einer Abnahmeeinrichtung für den Polymergelstrang, die im Bereich der Umlenkrollen für das Rückführen des Trägerbandes angeordnet ist, die dadurch gekennzeichnet ist, daß im Bereich des oberen Trums (21) des Trägerbandes (2) beidseitig der horizontalen Tragelemente (11), (120), beginnend im Bereich der Aufgabe- und Dosiereinrichtung (1), hochragende Stützelemente (14) vorgesehen sind, deren Längsachsen (140) einander in einem unterhalb des oberen Trums (21) liegenden Schnittpunkt schneiden, und das aufliegende Trägerband entsprechend muldenförmig verformt ist, wobei die Gestalt und Anordnung der Stützelemente (14) längs des oberen Trums (21) eine kontinuierliche Änderung der Muldenform der zu durchlaufenden Wegstrecke in der Weise bestimmen, daß das Ablösen des entstehenden klebrigen Polymerstranges vom Trägerband auf der vorgesehenen Wegstrecke, ausgehend von den Seitenrändern hin zur Mitte der vom Trägerband gebildeten Mulde, durch kontinuierliche Änderung der Muldenform unter der Bedingung P größer A x F erfolgt und wobei die mit dem Trägerband mitgeführte Trennfolie aus einem Kunststoff, wie z. B. Polyolefin (Polyethylen, Polypropylen, Polyisobutylen), Polyvinylchlorid, Tri- oder Tetrafluorethylen, Polyamid, Natur-, Silikon- oder synthetischen Kautschuk, Polyesterharz oder imprägniertem Textilgewebe aus Zellulose, wie Zellophan, imprägnierten Papieren oder nicht stark saugfähigen Papieren besteht. Erfindungsgemäß wird also das Trägerband im Bereich der Aufgabevorrichtung der Reaktionskomponenten von mehreren muldenförmig angeordneten Stütz- und Trageelementen gestützt, die eine tiefe muldenförmige oder trogartige Schale für die zulaufenden Reaktionskomponenten bilden. Hierbei wird die gewünschte Muldenform durch die Gestalt und Anordnung der Stützelemente längs der von dem oberen Trum zu durchlaufenden Wegstrecke bestimmt. Im Bereich der Aufgabe der Reaktionskomponenten sollten die Stützelemente relativ dicht aufeinander folgen, während im nachfolgenden Bereich, nach bereits eingetretener Polymerisation die Stützelemente in größerem Abstand aufeinander folgen können. Sowohl der Neigungswinkel der Stützelemente kann variiert werden als auch der Querschnitt der Stützelemente, um bspw. eine am Anfang tiefe Mulde zum Ende der Polymerisationsstrecke hin zu verflachen und wieder in den gestreckten Zustand zu überführen. Hierbei kann in weiterer Ausbildung der Erfindung jedes Stützelement von mindestens einer um die Längsachse bewegbaren, insbesondere zylindrischen oder kegeligen Rolle gebildet sein. Durch Veränderung sowohl des Rollenquerschnittes als auch der Rollengestalt ist die im Einzelfall gewünschte Querschnittform der Mulde leicht erzielbar. Um eine gute Ausformung der Mulde durch das Trägerband sowohl bei der Überführung vom flachen in den muldenförmigen als auch wieder zurück in den flachen Zustand zu erzielen, ist ein in Längs- und Querrichtung biegsames Trägerband vorzusehen.

Da bei dem erfindungsgemäßen Verfahren und Vorrichtung die Reaktionskomponenten in einer tiefen Mulde zu einer hohen Schicht aufgeschüttet werden sollen, ist das Zurücklaufen der flüssigen Reaktionskomponenten zu verhindern. Hierfür sind verschiedene Möglichkeiten gegeben. Nach einer Ausgestaltung der Erfindung wird vorgeschlagen, im Bereich der Stützelemente die Tragelemente und damit die horizontale Transportebene des oberen Trums gegenüber dem horizontalen Ablaufniveau von der Umlenkrolle abgesenkt anzuordnen. Durch die entsprechende Anordnung der Tragelemente und durch das Eigengewicht des Trägerbandes mit den Reaktionskomponenten wird erreicht, daß das Bodenniveau des Trägerbandes bzw. der gebildeten Mulde in dem Aufgabebereich der flüssigen Reaktionskomponenten sich niedriger, d.h. tiefer als das Trägerband vor dem Aufgabebereich befindet, so daß ein Zurücklaufen der flüssigen Reaktionskomponenten verhindert wird. Für den Fall, daß mit dem Trägerband noch eine Trennfolie mitgeführt wird, so ist bspw. die Abwicklungsvorrichtung für die Trennfolie höher zu setzen, so daß ebenfalls die Mulde sich in Transportbewegung abwärts geneigt erstreckt und damit ebenfalls das Zurücklaufen der Reaktionskomponenten verhindert wird.

Eine weitere Ausbildung der Mulde des Trägerbandes und definierte Führung kann nach einem weiteren Vorschlag der Erfindung dadurch erfolgen, daß im Bereich der Stützelemente parallel zur Ebene der Tragelemente auf den Enden der hochragenden Seitenränder des oberen Trums anliegend mindestens eine Begrenzungsrolle vorgesehen ist. Im Zusammenwirken mit dem Absenken des Trägerbandbodenniveaus kann damit erreicht werden, daß gleichzeitig die seitlich hochgebogenen Ränder des Trägerbandes durch die oberen Begrenzungsrollen nach unten gedrückt werden, so daß die sich bildende Mulde abgesenkt wird. Hierdurch ist es möglich, ohne irgendeine zusätzliche Abdichtung nach vorne oder hinten, die flüssigen Reaktionsmedien in die Mulde zu dosieren und gleicheitig ein Zurück- oder Ablaufen der flüssigen Reaktionskomponenten zu verhindern.

Es ist auch möglich, das Zurücklaufen der Reaktionskomponenten gemäß einem weiteren Vorschlag der Erfindung dadurch zu verhindern, daß in Transportrichtung betrachtet vor der Aufgabe- und Dosiereinrichtung mindestens eine Andruckrolle parallel zu den Tragelementen mit einer der Muldenform des oberen Trums angepaßten Gestalt auf der Oberseite desselben anliegend angeordnet ist. Durch Anordnung einer oder mehrerer Andruckrollen auf der Oberseite des Trums, die die Muldungsform des Trums aufweisen und dadurch die Mulde in der Gegenrichtung der Transportbewegungsrichtung abdichten, ist es auch möglich, die Lage des Trägerbandbodenniveaus von der Lage der Umlenkrolle unabhängig zu wählen, d.h. das Bodenniveau kann genau so hoch, niedriger oder sogar höher als die Umlenkrollen angebracht werden. Diese Andruckrollen sollten bevorzugt aus einem chemisch resistenten Material hergestellt werden, insbesondere aus einem elastischen Material, wie z.B. aus Kunststoff, Natur- oder synthetischem Kautschuk oder Silikonkautschuk unterschiedlicher Vulkanisationsgrade. Diese elastischen Andruckrollen können entweder allein oder in Kombination mit Andruckrollen aus hartem Material, z.B. Edelstahl verwendet werden.

Für den Transport und die Unterstützung und Aufrechterhaltung des Trägerbandes und der Muldungsform sind in der ersten Phase der Polymerisation horizontale Tragelemente, wie bspw. Tragrollen vorgesehen. Es ist aber auch möglich, gemäß einem weiteren Vorschlag der Erfindung, im Bereich des oberen Trums als horizontale Tragelemente eine sich in Transportrichtung erstreckende mit einer durchgehenden Öffnung ausgebildete Führungsschiene vorzusehen und das Trägerband auf seiner Unterseite mit hammerkopfartigen Profilstollen, die durch die Öffnung der Führungsschiene geführt sind, auszurüsten. Damit wird einerseits eine zwangsweise Führung des Trägerbandes in der Führungsschiene gewährleistet und desweiteren können die hammerkopfartigen Profilstollen zum Antrieb des Trägerbandes durch eine entsprechend genutete Umlenkrolle verwendet werden.

Die Muldenform des oberen Trums kann bei entsprechender Breite des Bandes relativ flach sein oder auch tief bei einem schmalen Band. Bevorzugt werden Breiten des Bandes von 20 bis 200 cm in ausgestrecktem Zustand, die zu Muldenbreiten von 15 bis 150 cm bei Muldenhöhen von 7 bis 30 cm geformt werden können.

Der in der Mulde des Trägerbandes durch Polymerisation entstandene Polymergelstrang hat beim Verlassen des Trägerbandes noch eine relativ weiche Konsistenz. Durch sein Eigengewicht allein kann der Polymergelstrang an einer sehr weichen oder noch nicht ausreichend polymerisierten, relativ flüssigen Stelle abreißen. Um dieses zu verhindern, wird als Bremse mindestens eine Stachelwalze und/oder ein Paar Andruckrollen hinter der Abnahmestelle des Polymergelstranges von dem Trägerband angeordnet. Diese Stachelwalze bzw. Andruckrollen sollten aus einem gegen die Reaktionskomponenten chemisch resistenten Material hergestellt sein und synchron mit der Umlenkrolle laufen, um ein gleichmäßiges Abnehmen zu gewährleisten.

Die erfindungsgemäße Vorrichtung ist auch zur Durchführung anderer chemischer oder physikalischer Prozesse geeignet, bei denen aus den flüssigen Ausgangskomponenten feste, halbfeste oder gelartige bis dickflüssige Endprodukte entstehen. Als Ausgangskomponenten können reine Flüssigkeiten, Emulsionen, Suspensionen oder Lösungen von festen Substanzen in verschiedenen Lösungsmitteln eingesetzt werden.

Das erfindungsgemäße Verfahren und die Vorrichtung werden nachfolgend an Beispielen und in der Zeichnung näher erläutert. Hierbei zeigen

Figur 1
Prinzipschema einer kontinuierlichen Bandanlage

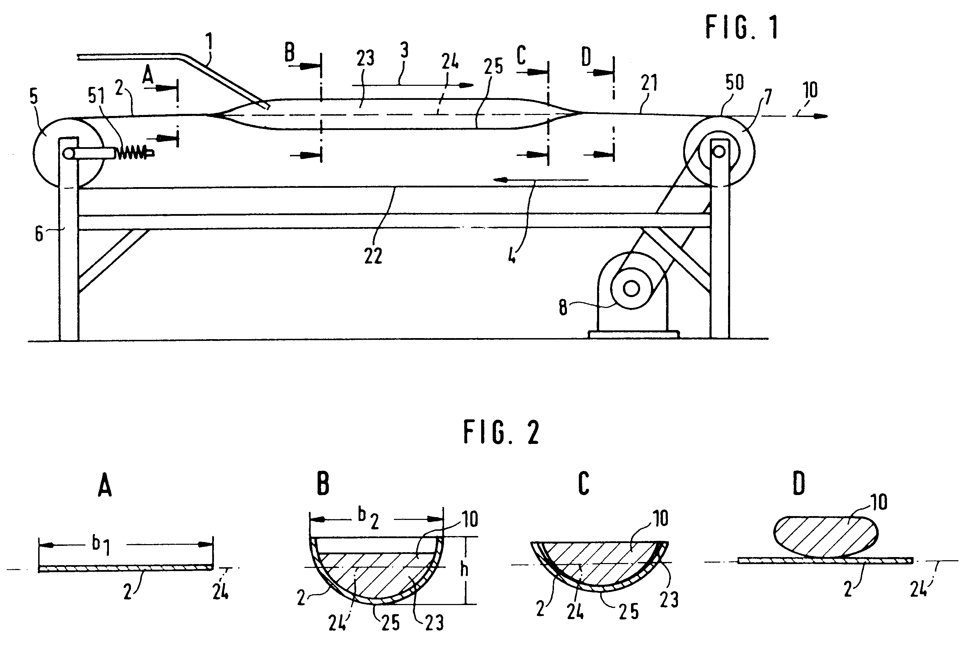

Figur 2
schematische Darstellung der Trägerbandquerschnitte des oberen Trums der Bandanlage gemäß Figur 1

Figur 3
perspektivische Ansicht einer Bandanlage

Figur 4
schematischer Querschnitt B gemäß Fig. 1 mit Trag- und Stützelementen

Figur 5
schematische Teilansicht einer Bandanlage mit Vorrichtung zur Trennmittelaufgabe

Figur 6 und Figur 7
zwei schematische Ansichten einer Bandanlage mit verschiedenen Reinigungsvorrichtungen

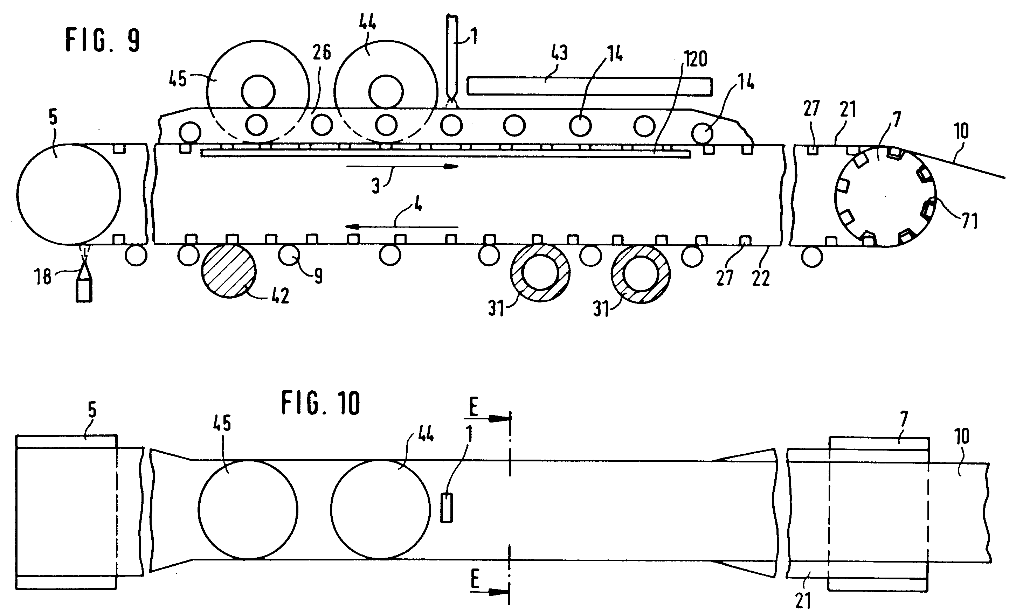

Figur 8
Schemaskizze einer Bandanlage mit Trennfolie und Annahmevorrichtung
Figur 9
Schema einer Bandanlage mit Andruckrollen zur Muldenbildung
Figur 10
Aufsicht auf das Schema der Bandanlage gemäß Figur 9
Figur 11
schematischer Querschnitt E gemäß Figur 10.

Die Funktionselemente einer Bandanlage zum kontinuierlichen Polymerisieren von in Lösungen aufgebrachten Monomeren in dicken Schichten enthält gemäß Figur 1 das endlos umlaufende Trägerband (2), das über mindestens zwei Umlenkrollen (5), (7) geführt ist. Hierbei ist bevorzugt die an der Abnahmestelle (50) für den Polymergelstrang (10) angeordnete Umlenkrolle (7) als Antriebsrolle ausgebildet und wird über den Antrieb (8) angetrieben. Die andere Umlenkrolle (5) ist als z.B. mittels Federn (51) und Gewichte bzw. Spindeln verstellbare Umlenkrolle zum Erzeugen der erforderlichen Vorspannung des Trägerbandes ausgebildet. Das Trägerband (2) ist somit gleichzeitig Trag- und Zugelement, für die über die Aufgabe- und Dosiereinrichtung (1) aufgegebenen Reaktionskomponenten. Das endlose Förderband mit den Umlenkrollen ist auf einem Fundamentrahmen (6) angeordnet. Das Trägerband (2) läuft in Pfeilrichtung (3), (4) um, wobei das obere Trum (21) durch nicht näher dargestellte Stützelemente zu der Muldenform (23) verformt ist. Die Mulde (23) kann dabei so geführt werden, daß sie in der Scheitelebene (24) der Umlenkrollen (5), (7) mit ihrem Boden verläuft, oder aber bspw. demgegenüber abgesenkt ist, so daß das Niveau des Muldenbodens im Bereich (25) verläuft. Die muldenförmige Verformung des oberen Trums (21) aus dem flachen gestreckten Zustand des Trägerbandes (2) beginnt kurz vor der Aufgabe- und Dosiereinrichtung der Reaktionskomponenten (1), die einzeln oder vermischt aufgegeben werden können. Am Ende der Polymerisationsstrecke wird die Mulde (23) des Trägerbandes wiederum in den flachen gestreckten Zustand kontinuierlich übergeführt. Das über die Umlenkrolle (7) zurücklaufende untere Trum (22) kann dann, wie später noch gezeigt wird, in diesem Bereich von anhaftenden Polymerresten gereinigt und der erneuten Aufgabe und Polymerisationsstrecke zugeführt werden.

In der Figur 2 sind schematisch die Bandquerschnitte A, B, C und D im Verlaufe des oberen Trums und der Polymerisationsstrecke dargestellt. Das von der Umlenkrolle (5) ablaufende Trägerband (2) ist gemäß Querschnitt A noch eben und flach und befindet sich in der Scheitelebene (24) es weist die Breite $b^1$, insbesondere von 20 bis 200 cm auf. Im Bereich des Querschnittes B ist das Trägerband zu der tiefen wannenartigen Mulde (23), mit der Höhe h und der Breite $b^2$ geformt und nimmt die Reaktionskomponenten, die zu dem Polymergelstrang (10) unter Annahme der Muldenform polymerisieren, auf. Das Bodenniveau (25) der Mulde bzw. des Trägerbandes kann gegenüber der Scheitelebene (24) abgesenkt sein, um auf diese einfache Weise ein Zurücklaufen und rückwärtiges Ausfließen der Reaktionskomponenten aus der Mulde zu verhindern. Am Ende der Polymerisationsstrecke wird, wie im Querschnitt C zu ersehen ist, das Trägerband (2) wieder in die flache Form zurückgeführt und der sich bildende und verfestigende Polymergelstrang (10) wird kontinuierlich von den Seitenrändern des Bandes her abgelöst. Hierbei kann auch ein Anheben des Bandbodenniveaus (25) in Richtung auf die Scheitelebene (24) erfolgen. Im Querschnitt D ist das Band (2) wieder in den ebenen gestreckten Zustand überführt und der Polymergelstrang (10), der jedoch aufgrund seiner weichen Konsistenz eine mehr elliptische Form annehmen wird, hat nur noch im Bereich des Bodens Berührung mit dem Trägerband und kann an der Umlenkrolle (7) an der Abnahmestelle (50) leicht von dem Band (2) gelöst werden.

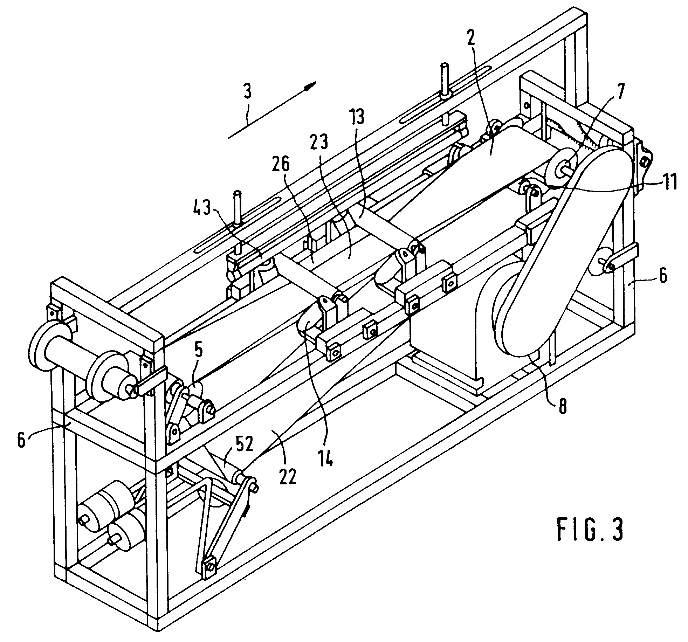

In der Figur 3 ist eine prinzipielle Konstruktion einer Bandanlage gemäß dem Schema der Figur 1 dargestellt. Die kontinuierliche Verformung des Trägerbandes (2) im Bereich des oberen Trums zu der Mulde (23) und die Rücküberführung in den gestreckten Zustand sind zu erkennen. Das Trägerband, das über die Umlenkrollen (5), (7) umläuft, wird im Bereich des oberen Trums von den horizontalen Tragrollen (11) gestützt und im Bereich des unteren Trums (22) von einer horizontalen Rolle (52) gespannt. Die Muldenbildung wird durch seitliche Stützrollen (14), die die Trog- oder Muldenform vorgeben, bewirkt. Das über die Tragrollen (11) und die seitlichen Stützrollen (14) geführte Trägerband (2) wird längs der Ränder (26) hochgebogen und bildet die Mulde (23). Um das Zurücklaufen der eingebrachten flüssigen Reaktionskomponenten zu verhindern, kann der Muldenboden in der Aufgabenzone abgesenkt werden, was sowohl durch das Eigengewicht des Bandes mit den Reaktionskomponenten als auch durch zusätzliche Vorrichtungselemente erreicht werden kann. Somit befindet sich das Trägerband im Bereich des Einbringens der Reaktionskomponenten in einer tieferen Position als in dem Bereich davor, dies kann auch durch die höher stehende Umlenkrolle oder durch eine höher stehende Abwicklungsvorrichtung bei Einführen einer Trennfolie auf die Oberseite des Trägerbandes erreicht werden.

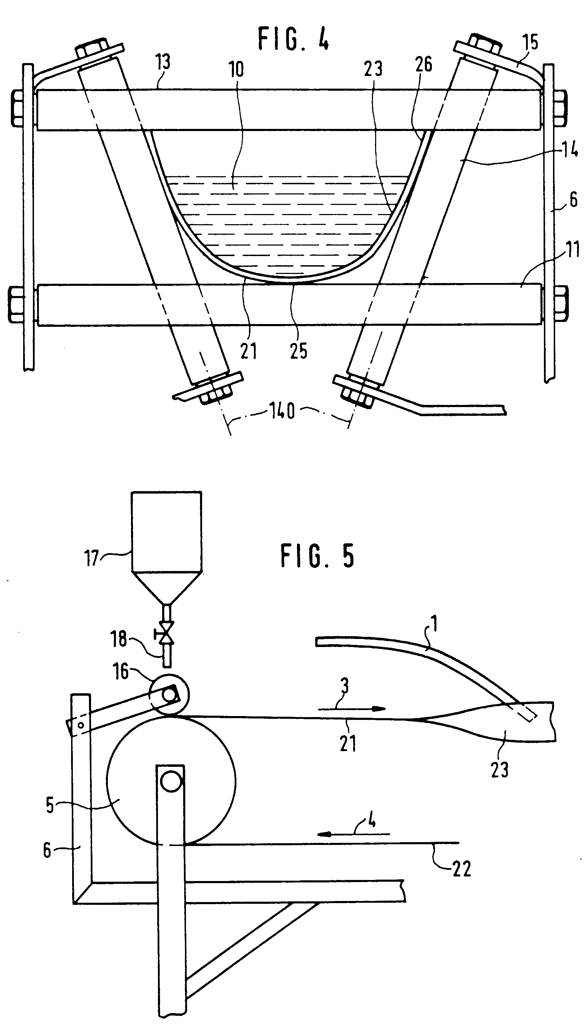

Die Figur 4 zeigt im Querschnitt eine mögliche Konstruktion der Vorrichtung zum kontinuierlichen Formen des Trägerbandes, d.h. des oberen Trums (21) zur Mulde (23) gemäß Figur 3. An Streben des Fundamentrahmens (6) sind die horizontalen Tragrollen (11) für das obere Trum (21) gelagert und seitliche Stützrollen (14), deren Achsneigung (140) die Form der Mulde, flacher oder tiefer bestimmt. In Transportrichtung hintereinander sind entsprechend der Größe der Mulde, und dem Gewicht der Reaktionskomponenten mehrere Stützrollen hintereinander angeordnet. Die hochgebogenen Ränder (26) des Trums (21) liegen an den Stützrollen (14) an, gleichzeitig werden die Ränder (26) durch obere Begrenzungsrollen (13), die ebenfalls am Fundamentrahmen (6) geführt sind, begrenzt und nach unten gedrückt, so daß die geformte Mulde definiert zwangsweise in einem vorgegebenen Trog entlang der Rollen (11), (14), (13) geführt ist. Hierbei kann das Bandbodenniveau (25) durch entsprechende abgesenkte Anordnung der Tragrollen (11) ebenfalls abgesenkt werden, so daß das Zurücklaufen der Reaktionskompontenten verhindert wird. Bei einer solchen Ausführung der Tragmulde für die flüssigen Reaktionskomponenten ist keinerlei Abdichtung nach vorne oder nach hinten notwendig. Es ist auch möglich, die oberen Begrenzungsrollen (13) durch beiseitig angebrachte Führungsschienen, in denen die hochgebogenen Ränder (26) geführt werden, zu ersetzen.

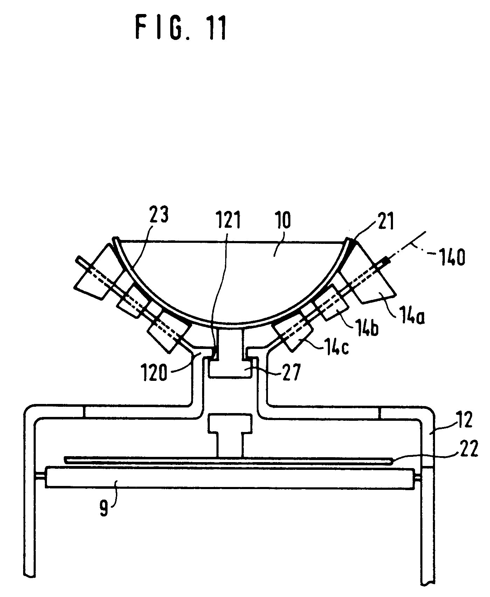

Eine weitere konstruktive Lösung einer Bandanlage unter Verhinderung des Zurücklaufens der Reaktionskomponenten ist in den Figuren 9 bis 11 dargestellt. Hierbei wird das Trägerband (2) endlos über die Umlenkrollen (5), (7) geführt, wobei die seitlichen Ränder (26) mittels Stützrollen (14) aus der Scheitelebene (24) nach oben gebogen werden. In die so gebildete Mulde sind mindestens eine, in der Ausführung zwei Andruckrollen (44), (45) vor der Aufgabe- und Dosiereinrichtung (1) für die flüssigen Reaktionskomponenten eingesetzt. Die Oberflächen, d.h. die Gestalt der Andruckrollen (44), (45) ist der Muldenform angepaßt, wie aus der Aufsicht aus Figur 10 zu ersehen ist, und dadurch wird die Mulde (23) in der Gegenrichtung der Transportrichtung (3) des Trägerbandes abgedichtet. Bei einer solchen Konstruktion ist die horizontale Lage des Trägerbandes von der Scheitelhöhe der Umlenkrollen unabhängig. Die Andruckrollen (44), (45) entsprechen in ihrer Breite der Breite der Mulde (23), wobei die zweite hintere Rolle als zusätzliche Abdichtung gegen den Rücklauf der Reaktionskomponenten dient. Die Andruckrollen können aus einem elastischen Material, z.B. synthetischem Kautschuk hergestellt sein und allein oder in Kombination mit Andruckrollen aus einem harten Material, z.B. Edelstahl verwendet werden. Die Führung und Unterstüzung des Trägerbandes, insbesondere des oberen Trums (21) wird mittels der Führungsschiene (120) vorgenommen. Diese Führungsschiene (120) ist über den Rahmen (12) mit dem Fundamentrahmen (6) verbunden und weist, wie dies aus der Figur 11 zu ersehen ist, den durchgehenden Längsschlitz (121) auf. Auf der Unterseite des Trägerbandes (2) sind hammerkopfförmige Profilstollen (27) befestigt, die in der Führungsschiene (120) durch die Öffnung (121) hindurch geführt sind. Diese Profilstollen (27) können dann gleichzeitig in entsprechende Nuten (71) der Umlenkrolle (7) bzw. analog bei der Umlenkrolle (5) eingreifen und die Zwangsförderung ermöglichen. Damit kann die Umlenkrolle (7) gleichzeitig als Antriebsrolle ausgebildet sein.

Nachfolgend zu der Aufgabe- und Dosiereinrichtung (1) für die Reaktionskomponenten kann, wie in Figur 3 und 9 schematisch dargestellt, eine Belichtungseinrichtung (43) und ggfs. Trockungseinrichtungen, wie IR- oder UV-Lampen zur Initiierung der Polymerisation angeordnet sein. Es ist auch möglich, für bestimmte Prozesse die gesamte Bandanlage luftdicht abzukapseln, so daß ein Arbeiten in definierter Gasatmosphäre unter Luftausschluß, unter Druck oder unter Vakuum möglich ist. Für die Kühlung des Trägerbandes oder Energiezufuhr kann die Bandanlage auch mit einer nicht näher dargestellten Kühleinrichtung oder Heizung ausgestattet werden. Das Trägerband kann in waagerechter oder auch leicht nach oben sowie leicht nach unten geneigter Lage betrieben werden, d.h. angeordnet werden, was von der Transportgeschwindigkeit, der Reaktionsgeschwindigkeit, der Polymerisation und auch der Viskosität der flüssigen Reaktionskomponenten abhängig ist.

Auf der Unterseite des zurücklaufenden Trums (22) sind vorteilhaft Reinigungsvorrichtungen, wie Walzenbürsten (31), und Trockenrolle (42) angeordnet. Zur Abstützung des unteren Trums (22) können Tragrollen (9) vorgesehen sein.

Sollten die Reaktionskomponenten bzw. der enstehende Polymergelstrang sehr stark zum Ankleben an dem Trägerband neigen, ist es auch möglich, das Trägerband nach der Reinigung und vor dem Aufbringen der Reaktionskomponenten mit einem Trennmittel zu behandeln. Eine solche Trennmittelaufbringung mittels Sprühdüse (18) ist in der Figur 9 schematisch dargestellt.

Es ist aber auch möglich, ein Trennmittel auf das Trägerband unmittelbar nach der Umlenkrolle (5), wie schematisch auszugsweise in Figur 5 dargestellt, aufzubringen. Das Trennmittel kann hierbei aus einem Behälter (17) über ein Regelventil aus der Sprühdüse (18) auf eine Filzwalze (16) oder Bürste aufgebracht und mittels dieser gleichmäßig auf das obere Trum (21) des Trägerbandes aufgetragen werden. Die Filzwalze (16) kann hierbei ebenfalls an dem Fundamentrahmen (6) in geeigneter Position befestigt sein.

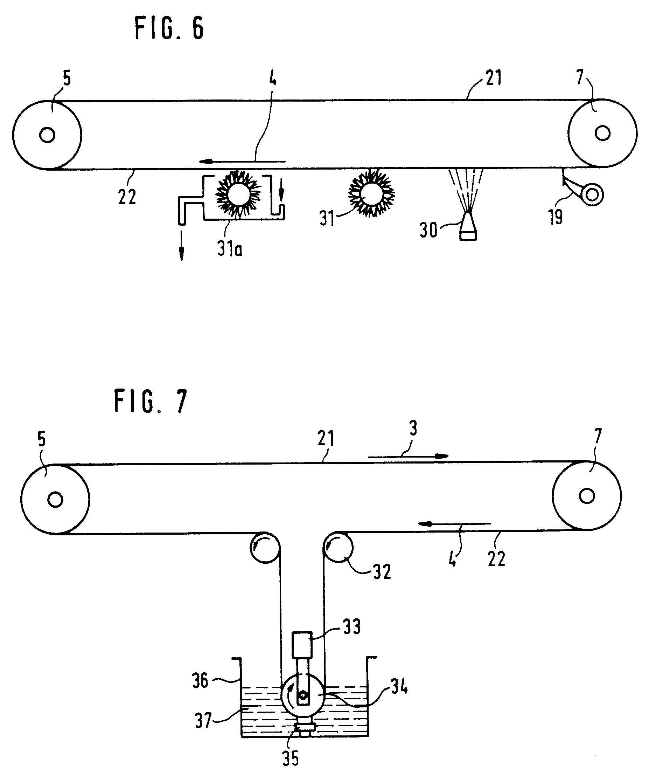

Wie aus dem oberen Trumquerschnitt gemäß Figur 11 hervorgeht, kann die Muldenform (23) des Trägerbandes durch die Gestalt und Ausbildung der seitlichen Stützrollen (14) und deren Achslage (140) bestimmt werden. Bei dem gezeigten Beispiel sind auf der Achse (140) drei Stützrollen (14a), (14b) und (14c) unterschiedlicher Gestalt angeordnet, die entlang ihrer Oberfläche eine konkave Muldenform ergeben. Die Stützrollen weisen bevorzugt eine kegelige bis zylindrische Form auf. Zur Reinigung der Bandanlage sind in den Figuren 6 und 7 schematisch weitere Möglichkeiten dargestellt. Beispielsweise kann gemäß Figur 6 beim Rücklauf des Trägerbandes im Bereich des unteren Trums (22) nach der Umlenkstelle um die Umlenkrolle (7) ein Rakel (19) angeordnet sein, anschließend Sprühdüsen (30) für ein Lösungsmittel, um das restliche Polymere anzulösen und anschließend eine Reinigungsbürste (31). Man kann auch die Bürste unterhalb ihrer Achse in einen Behälter (31a) eintauchen lassen, der von einem entsprechenden Lösungsmittel durchströmt wird, um mit dieser getränkten Bürste das Band zu reinigen. Es ist aber auch möglich, das untere Trum (22), wie in der Figur 7 gezeigt, vollständig durch ein entsprechendes Lösungsmittelbad, siehe Behälter (36) mit Lösungsmittel (37), laufen zu lassen, wobei in dem Bad eine belastete Spannrolle (34) mit Gewicht (33) und Bürste (35) angeordnet sind.

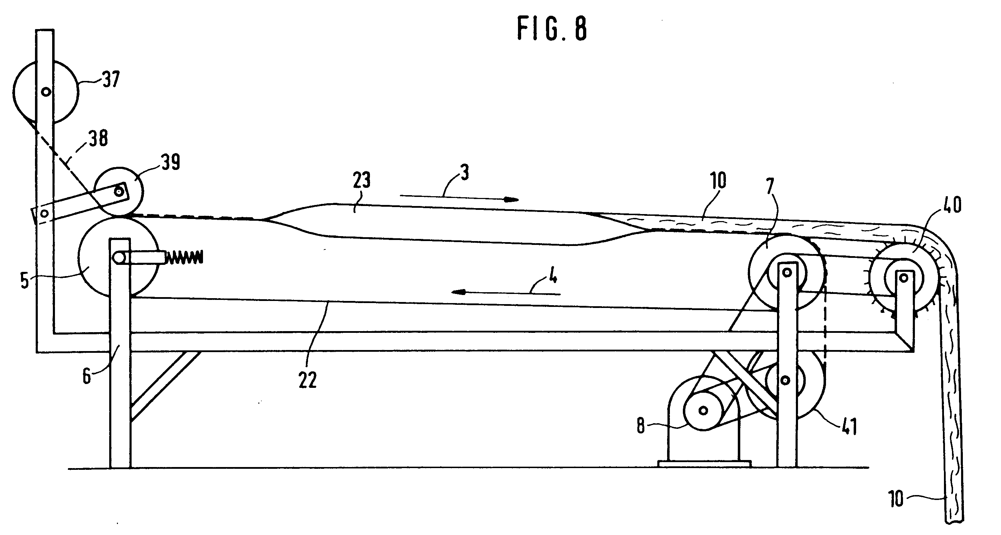

In der Figur 8 ist schematisch eine Bandanlage mit einer Trennfolie (38), die als Begleitfolie mit dem oberen Trum (21) läuft, dargestellt. Die Abwicklungsvorrichtung ist ebenfalls an dem Fundamentrahmen (6) befestigt und besteht aus der Trennfolienvorratsrolle (37) und der auf die Umlenkrolle (5) einwirkenden Andruckrolle (39), die auch zusätzlich noch als Trennmittelwalze benutzt werden kann. Die Trennfolie (38) wird am Ende des Polymerisationsvorganges an der Umlenkwalze (7) wieder abgezogen, d.h. auch von dem Polymergelstrang (10) getrennt, und ebenfalls von dem umlaufenden Trägerband getrennt auf die Aufwickelwalze (41) aufgewickelt. Der Antrieb erfolgt hierbei synchron mit dem Antrieb (8) für die Umlenkrolle (7). Es ist auch möglich, die Abwickelvorrichtung für die Trennfolie (38) oberhalb des oberen Trums (21) zulaufen zu lassen, um ein Zurücklaufen der in die von Trägerband und Trennfolie gebildete Mulde der Reaktionskomponenten zu vermeiden.

Um ein mögliches Abreißen des noch weichen Polymergelstranges (10) nach dem Ablösen von dem Trägerband bzw. der Trennfolie zu vermeiden, wird als Bremse und Förderorgan, wie in der Figur 8 dargestellt, der Umlenkwalze (7) eine Stachelwalze (40) nachgeordnet. Es können hierbei auch mehrere Stachelwalzen oder ein Paar Andruckrollen vorgesehen sein. Diese laufen synchron mit der Umlenkrolle, und werden mit der letzteren bspw. durch Zahnräder und Kettenantrieb gekoppelt. Der Polymergelstrang (10) drückt sich in die Spitzen der Stachelwalze oder durch den Spalt von einem Andruckrollenpaar hindurch und wird auf diese Weise am Abreißen gehindert und kontinuierlich weiterbefördert.

Das Verfahren zum Polymerisieren von Acrylpolymeren aus einer Monomerenlösung mit einer Bandanlage der vorangehend beschriebenen Ausführungen wird nachfolgend an Beispielen erläutert:

Beispiel 1

In einem mit Stickstoff ausgeblasenen Kessel werden 69,0 kg Acrylamid und 7,8 kg Acrylsäure in 180 kg Wasser gelöst und mit 13,5 kg 45%iger Kalilauge auf pH = 9,5 eingestellt. In die Monomerlösung werden noch 1,5 kg eines Gemisches aus 0,6 kg Tetraallyloxyethan mit 0,6 kg Polyoxyethylensorbitan in Wasser zudosiert und mit Stickstoff ausgeblasen. Die Monomerlösung wurde nach der Vermischung mit Katalysatorlösungen in einer Mischeinrichtung mit einer Dosiergeschwindigkeit von 1,5 kg/min auf das Trägerband einer Bandanlage gemäß Figur 3 aufgetragen. Das Katalysatorsystem bestand aus einem Redoxsystem mit 0,3 kg Natriumpyrosulfit; 0,16 kg Kaliumpersulfat und 0,01 kg Eisen-II-gluconat und 0,16 kg Azoinitiator AIBN. Die Laufgeschwindigkeit des Trägerbandes betrug 10 cm/min und die gesamte Reaktionszeit 30 min, wobei die maximale Temperatur von 101 °C nach 15 min schon erreicht wurde. Der Umsatz betrug 99,1%. Als Trennschicht zwischen dem Trägerband aus Polyamid und dem Polymergel wurde eine als Trennfolie mitgeführte Polyethylenfolie einer Dicke von 0,075 mm verwendet. Das Trägerband hatte im ausgestreckten Zustand eine Breite von 50 cm und bildete eine Mulde von 30 cm Breite und 15 cm Tiefe. Der Polymergelstrang hatte eine Dicke von 6 cm.

Beispiel 2

In einem emaillierten Behälter wurden 186 kg Acrylsäure und 370 kg Wasser vorgelegt und mit 91 kg Natriumhydrogencarbonat auf pH = 4,3 neutralisiert. Die Monomerlösung wurde mit Stickstoff ausgeblasen und nach Vermischung mit den Katalystorlösungen in einem Mischrohr mit einer Dosiergeschwindigkeit von 2 kg/min auf das Trägerband dosiert. Das Katalysatorsystem bestand aus einem Gemisch von 5,4 kg Azoinitiatoren ABAH und einem Photoinitiator (0,5 kg Benzildimethylketal). Die Polymerisation wurde durch UV-Licht initiiert. Bei einer Laufgeschwindigkeit des Trägerbandes von 12,5 cm/min wurde die maximale Temperatur von 100 °C schon nach 10 Minuten erreicht. Nach einer Strecke von ca. 100 cm war die Monomerlösung nicht mehr fließfähig und bildete eine Gelmasse. Die Gesamtreaktionszeit betrug 25 min., wobei ein Umsatz von 98% erreicht wurde, d.h. der Restmonomerengehalt betrug 2 Gew.-%. Es wurde eine Bandanlage gemäß Beispiel 1 benutzt, die Reaktionskomponenten wurden zu einer Schichtdicke von 7 cm aufgetragen.

### Beispiel 3

In der Monomerlösung gemäß Beispiel 2 wurde zusätzlich noch 0,4% Polyethylenoxid gelöst, wodurch die Viskosität der Monomerlösung von 10 mPa.s auf 150 mPa.s erhöht und das Fließvermögen der Monomerlösung erniedrigt wurde. Die Polymerisation wurde nach gleichen Bedingungen wie in Beispiel 2 durchgeführt. Die maximale Temperatur wurde nach 10 Minuten Belichtungszeit erreicht, wobei schon nach einer Strecke von ca. 80 cm die Monomerlösung nicht mehr fließfähig war und eine Gelmasse bildete.

### Beispiel 4

In einem mit Stickstoff ausgeblasenen Kessel werden 42,0 kg Acrylsäure und 4,2 kg Methacrylsäure mit 125 kg Wasser vermischt und mit 18,5 kg Ammoniak (25%ig) unter Kühlung auf pH = 4,4 neutralisiert. Danach wurde 0,25 kg Methylenbisacrylamid zur Monomerlösung zugegeben und mit Stickstoff ausgeblasen. Die Monomerlösung und die Katalysatorlösung wurden mit Schlauchpumpen mit einer Dosiergeschwindigkeit von 50 kg/h (Monomerlösung) bzw. 5 kg/h (Katalysatorlösung) auf ein Trägerband aus Silikonkautschuk aufgetragen. Hierbei wurde eine Bandanlage gemäß dem Schema von Fig. 1 bzw. Fig. 3 benutzt. Das Katalysatorsystem bestand aus einem Gemisch aus 80 g Azobispropionsäureamidinhydrochlorid und 40 g Benzildimethylketal gelöst in verdünnter Acrylsäure. Die Laufgeschwindigkeit des Trägerbandes betrug 5 cm/min und die gesamte Reaktionszeit 24 min, wobei die maximale Temperatur von 102°C schon nach 11 min erreicht wurde. Die Reaktionskomponenten wurden zu einer Schichtdicke von 8 cm aufgetragen, die Lösung hatte eine Viskosität von 14 mPa.s. Es wurde ein Umsatz von 99,5% erreicht.

### Beispiel 5

In einem emaillierten Behälter wurden in 156 kg Acrylsäure und 390 kg Wasser 1,1 kg Methylenbisacrylamid gelöst. Der pH-Wert der nicht neutralisierten Monomerlösung betrug 2,05. Die Monomerlösung wurde mit Stickstoff ausgeblasen und nach Vermischung mit den Katalysatorlösungen in einem Mischrohr mit einer Dosiergeschwindigkeit von 1,8 kg/min auf das Trägerband dosiert. Das Katalysatorsystem bestand aus einer Lösung von 0,12 kg ABAH, 0,2 kg t-Butylhydroperoxid in Wasser und einem Photoinitiator (0,06 kg Benzildimethylketal). Die Polymerisation wurde durch UV-Licht initiiert. Bei einer Laufgeschwindigkeit des Trägerbandes von 12,5 cm/min wurde die maximale Temperatur von 98°C nach 10 Minuten erreicht. Die Gesamtreaktionszeit betrug 30 min., wobei ein Umsatz von 98% erreicht wurde. Es wurde eine Bandanlage mit Band, dessen Oberfläche mit Silikonkautschuk beschichtet war, benutzt, die Reaktionskomponenten wurden zu einer Schichtdicke von 6 cm aufgetragen.

### Beispiel 6

In einem mit Stickstoff ausgeblasenen Kessel werden 137 kg Acrylsäure und 19,1 kg Dimethylaminopropylacrylamid in 300 kg Wasser gelöst und mit 71 kg 45%iger Natronlauge neutralisiert. Die mit Stickstoff ausgeblasene Monomerlösung wurde nach der Vermischung mit Katalysatorlösungen in einer Mischeinrichtung mit einer Dosiergeschwindigkeit von 1,5 kg/min auf das Trägerband einer Bandanlage gemäß Fig. 1 aufgetragen. Das Katalysatorsystem bestand aus einem Redoxsystem gemäß Beispiel 1 (Natriumpyrosulfit, Kaliumpersulfat, Eisen-II-gluconat) und ABAH. Die Laufgeschwindigkeit des Trägerbandes betrug 10 cm/min und die gesamte Reaktionszeit 30 Minuten. Der Umsatz betrug 98,5%. Als Trennschicht zwischen dem Trägerband aus Polyamid und dem Polymergel wurde eine als Trennfolie mitgeführte Polyethylenfolie verwendet. Der Polymergelstrang hatte eine Dicke von 6 cm.

### Beispiel 7

In der teilweise neutralisierten Monomerlösung gemäß Beispiel 6 wurden 1,12 kg Methylenbisacrylamid gelöst und auf dem Band mit Hilfe von UV-Licht polymerisiert. Das Katalysatorsystem bestand aus einer Lösung von 0,06 kg Benzildimethylketal, 0,12 kg ABAH und 0,18 kg t-Butylhydroperoxid. Die Monomerlösung wurde zunächst mit den Katalysatorlösungen vermischt und danach mit einer Dosiergeschwindigkeit von 1,8 kg/min auf das Trägerband mit einer Laufgeschwindigkeit von 10 cm/min aufgetragen. Als Trennschicht zwischen dem Trägerband und dem Polymergel wurde eine mitgeführte Cellulosefolie verwendet, die danach mit dem Polymergel weiterverarbeitet wurde. Der Polymergelstrang hatte eine Dicke von 8 cm, und der Umsatz betrug 99,1%.

Beispiel 8

In der partiell neutralisierten Monomerlösung gemäß Beispiel 2 wurden 1,5 kg Methylenbisacrylamid gelöst, danach die Lösung mit Stickstoff ausgeblasen und mit einer Dosiergeschwindigkeit von 2,2 kg/min auf das Trägerband, das sich mit einer Geschwindigkeit von 10 cm/min bewegte, aufgetragen. Die Polymerisation wurde mit UV-Licht (Katalysatorsystem: Benzildimethylketal, ABAH und t-Butylhydroperoxid) initiiert. Der Polymergelstrang hatte eine Dicke (in der Mitte gemessen) von 11 cm, und der Umsatz betrug 99,5%.

Beispiel 9

Eine Monomerlösung aus 140 kg Acrylsäure, 16,1 kg Hydroxypropylacrylat, 1,12 kg Methylenbisacrylamid in 280 kg Wasser, mit 88 kg 45%iger Natronlauge teilweise neutralisiert, wurde mit einer Dosiergeschwindigkeit von 1,0 kg/min auf das Trägerband (10 cm/min) aufgetragen und mit UV-Licht polymerisiert (Katalysatorsystem gem. Beispiel 7). Die Schichtdicke der Monomerlösung betrug 5 cm, und es wurde ein Umsatz von 98,1% erreicht.

Beispiel 10

Eine Monomerlösung aus 145 kg Acrylsäure, 11,0 kg Vinylacetat, 1,12 kg Methylenbisacrylamid in 280 kg Wasser, mit 91 kg 45%iger Natronlauge teilweise neutralisiert, wurde mit einer Dosiergeschwindigkeit von 1,1 kg/min auf das Trägerband (10 cm/min) aufgetragen und mit UV-Licht polymerisiert (Katalysatorsystem gem. Beispiel 7). Die Schichtdicke der Monomerenlösung betrug 5 cm, und es wurde ein Umsatz von 99,0% erreicht.

Beispiel 11

Eine Monomerlösung aus 125 kg Acrylsäure, 90 kg Acrylamidopropansulfonsäure, 1,12 kg Methylenbisacrylamid in 280 kg Wasser, mit 135 kg 45%iger Natronlauge teilweise neutralisiert, wurde mit einer Dosiergeschwindigkeit von 0,8 kg/min auf das Trägerband (10 cm/min) aufgetragen und mit UV-Licht polymerisiert (Katalysatorsystem gem. Beispiel 7). Die Schichtdicke der Monomerlösung betrug 4 cm, und es wurde ein Umsatz von 98,7% erreicht.

Beispiel 12

In einem emaillierten Behälter wurden 18,6 kg Acrylamid und 0,11 kg Methylenbisacrylamid in 39,5 kg Wasser gelöst. Der pH-Wert der Monomerlösung betrug 4,5. Die Monomerlösung wurde mit Stickstoff ausgeblasen und nach Vermischung mit den Katalysatorlösungen in einem Mischrohr mit einer Dosiergeschwindigkeit von 0,17 kg/min auf das Trägerband dosiert. Das Katalysatorsystem bestand aus einer Lösung von 12 g ABAH, 20 g t-Butylhydroperoxid in Wasser und einem Photoinitiator (6,5 g Benzildimethylketal). Die Polymerisation wurde durch UV-Licht initiiert. Bei einer Laufgeschwindigkeit des Trägerbandes von 6 cm/min wurde die maximale Temperatur von 102 °C nach 10 Minuten erreicht. Die Gesamtreaktionszeit betrug 18 min., wobei ein Umsatz von 99,8% erreicht wurde. Es wurde eine Bandanlage gemäß Erfindung mit Band, dessen Oberfläche mit Silikonkautschuk beschichtet war, benutzt. Das Trägerband hatte im ausgestreckten Zustand eine Breite von 16 cm und bildete ein Mulde von 10 cm Breite und 5,5 cm Tiefe. Der Polymergelstrang hatte eine Dicke von 4 cm.

Beispiel 13

In einem Stickstoff ausgeblasenen Behälter werden 7,8 kg Acrylamid und 21,3 kg Dimethylaminoethylacrylat, quarterniert mit $CH_3Cl$, in 31,0 kg Wasser gelöst. Die mit Stickstoff ausgeblasene Monomerlösung wurde dann nach der Vermischung mit Katalysatorlösungen in einer Mischeinrichtung mit einer Dosiergeschwindigkeit von 0,17 kg/min auf das Trägerband einer Bandanlage gemäß Beispiel 12 aufgetragen. Das Katalysatorsystem bestand aus einem Redoxsystem 0,3 g Natriumpyrosulfit, 0,6 g Kaliumpersulfat und 12,0 g ABAH. Die Laufgeschwindigkeit des Trägerbandes betrug 4,5 cm/min und die gesamte Reaktionszeit 30 Minuten. Der Umsatz betrug 98,5%. Als Trennschicht zwischen dem Trägerband aus Polyamid und dem Polymergel wurde eine als Trennfolie mitgeführte Polyethylenfolie verwendet. Der Polymergelstrang hatte eine Dicke von 5 cm.

Beispiel 14

Eine Monomerlösung aus 12,5 kg Acrylamid, 9,0 kg Acrylamidopropansulfonsäure, 0,11 kg Methylenbisacrylamid in 38,0 kg Wasser, mit 2,6 kg 45%iger Natronlauge teilweise neutralisiert, wurde mit einer Dosiergeschwindigkeit von 0,1 kg/min auf das Trägerband (Laufgeschwindigkeit 6 cm/min) aufgetragen. Mit Katalysatorsystem gem. Beispiel 12 wurde die Monomerlösung durch UV-Licht polymerisiert. Die Schichtdicke der Monomerlösung betrug 3 cm, und es wurde ein Umsatz von 98,1% erreicht.

**Patentansprüche**

1. Verfahren zum kontinuierlichen Herstellen von Polymerisaten und Copolymerisaten von wasserlöslichen Monomeren ggf. mit weiteren Comonomeren durch Polymerisieren einer wäßrigen Monomerenlösung enthaltend 2,2-8,3 Mole polymerisationsfähiger Doppelbindungen pro Kilo Monomerenlösung sowie ggf. Katalysatoren und/oder Photoinitiatoren in einem Temperaturbereich von etwa -10 bis 120 °C, wobei die flüssigen Reaktionskomponenten als mindestens 1 cm dicke Schicht auf ein bewegliches, endlos umlaufendes Trägerband aufgetragen und polymerisiert werden, dadurch gekennzeichnet, daß die flüssigen Reaktionskomponenten in eine von dem Trägerband fortlaufend gebildete Mulde eingebracht werden und während der Polymerisation der Reaktionskomponenten die Muldenform des Trägerbandes kontinuierlich in eine gestreckte ebene Bandform überführt wird und der entstehende Polymergelstrang, ausgehend von den Seitenrändern hin zur Mitte der von dem Trägerband gebildeten Mulde sich fortlaufend beim Überführen der gekrümmten Muldenform des Trägerbandes in die gestreckte ebene Bandform ablöst, wobei das Ablösen unter der Bedingung Kraft P größer A • F (Kontaktfläche x Klebkraft) erfolgt, wobei die flüssigen Reaktionskomponenten auf eine mit dem Trägerband mitgeführte Trennfolie aus einem Kunststoff, wie z.B. Polyolefin (Polyethylen, Polypropylen, Polyisobutylen), Polyvinylchlorid, Tri- oder Tetrafluorethylen, Polyamid, Natur-, Silikon- oder synthetischem Kautschuk, Polyesterharz oder imprägniertem Textilgewebe oder Folien auf Cellulosebasis wie Cellophan, imprägnierte Papiere, nicht stark saugfähige Papiere, aufgebracht werden.

2. Verfahren zum kontinuierlichen Herstellen von Polymerisaten und Copolymerisaten von wasserlöslichen Monomeren ggf. mit weiteren Comonomeren durch Polymerisieren einer wäßrigen Monomerenlösung enthaltend 2,2-8,3 Mole polymerisationsfähiger Doppelbindungen pro Kilo Monomerenlösung sowie ggf. Katalysatoren und/oder Photoinitiatoren in einem Temperaturbereich von etwa -10 bis 120 °C, wobei die flüssigen Reaktionskomponenten als mindestens 1 cm dicke Schicht auf ein bewegliches, endlos umlaufendes Trägerband aufgetragen und polymerisiert werden, dadurch gekennzeichnet, daß die flüssigen Reaktionskomponenten in eine von dem Trägerband fortlaufend gebildete Mulde eingebracht werden und während der Polymerisation der Reaktionskomponenten die Muldenform des Trägerbandes kontinuierlich in eine gestreckte ebene Bandform überführt wird und der entstehende Polymergelstrang, ausgehend von den Seitenrändern hin zur Mitte der von dem Trägerband gebildeten Mulde sich fortlaufend beim Überführen der gekrümmten Muldenform des Trägerbandes in die gestreckte ebene Bandform ablöst, wobei das Ablösen unter der Bedingung P größer A • F erfolgt, wobei ein Trägerband verwendet wird, dessen zumindest oberste mit den Reaktionskomponenten in Berührung kommende Schicht aus Silikonkautschuk hergestellt ist.

3. Verfahren nach Anspruch 1 oder 2, dadurch gekennzeichnet, daß die Monomerlösung kontinuierlich in die von dem Trägerband gebildete Mulde zu einer Schichtdicke von mindestens 2 cm, bevorzugt mehr als 6 cm eindosiert wird und der sich bildende Polymergelstrang während der Polymerisation die Form der Mulde annimmt.

4. Verfahren nach einem der Ansprüche 1 bis 3, dadurch gekennzeichnet, daß die Polymerisation innerhalb von 60 min, bevorzugt innerhalb von 10 bis 30 min durchgeführt wird.

5. Verfahren nach einem der Ansprüche 1 bis 4, dadurch gekennzeichnet, daß der pH-Wert der Monomerlösung in einem Bereich unter 10, bevorzugt zwischen 2 bis 7 und besonders bevorzugt zwischen 3,5 bis 5,0 liegt.

6. Verfahren nach einem der Ansprüche 1 bis 5, dadurch gekennzeichnet, daß ein zumindest in Teilbereichen biegsames, der gewünschten Muldenform während der Polymerisationsphase anpaßbares Trägerband verwendet wird.

7. Verfahren nach Anspruch 1, dadurch gekennzeichnet, daß die Trennfolie auf Cellulose- oder Kunststoffbasis mit dem darauf erzeugten Polymergelstrang gemeinsam weiterverarbeitet und Bestandteil des hergestellten Polymerisates wird.

8. Verfahren nach einem der Ansprüche 1 bis 7, dadurch gekennzeichnet, daß zur Ausbildung der Muldenform die Seitenränder des Trägerbandes vor dem Bereich des Eindosierens der Reaktionskomponenten aus der horizontalen Ebene nach oben gebogen werden.

9. Verfahren nach einem der Ansprüche 1 bis 8, dadurch gekennzeichnet, daß das Niveau des Trägerbandes im Bereich der Muldenbildung, insbesondere im Aufgabebereich der Reaktionskomponenten, gegenüber dem vorangehenden Niveau des zulaufenden ebenen Trägerbandes abgesenkt wird.

10. Verfahren nach einem der Ansprüche 1 bis 9, dadurch gekennzeichnet, daß die Mulde des Trägerbandes in Transportrichtung vor dem Bereich des Eindosierens der Reaktionskomponenten abgedichtet wird.

11. Verfahren nach einem der Ansprüche 1 bis 10, dadurch gekennzeichnet, daß der Monomerenlösung Verdickungsmittel auf Naturbasis und/oder synthetischer Basis, wie Alginate, Carboxymethylcellulose, Polyvinylalkohol, hochmolekulare Polymere auf Basis der Acrylsäurederivate, wie Mono- und Copolymerisate von Acrylamid, Acrylsäure, Acrylnitril oder des Ethylenoxids zugegeben werden.

12. Verfahren nach einem der Ansprüche 1 bis 11, dadurch gekennzeichnet, daß eine Monomerenlösung mit einer Viskosität im Bereich von 5 bis 5000 mPa.s bevorzugt von 10 bis 200 mPa.s verwendet wird.

13. Verfahren nach einem der Ansprüche 1 bis 12, dadurch gekennzeichnet, daß die Polymerisation der Monomerenlösung durch UV-Licht unter Verwendung von Photoinitiatoren, bevorzugt von Benzil- oder Benzoinderivaten, und/oder durch chemische Katalysatorsysteme, initiiert wird.

14. Verfahren nach einem der Ansprüche 1 bis 13, dadurch gekennzeichnet, daß als Monomere Acrylsäure und/oder Methacrylsäure eingesetzt werden.

15. Verfahren nach einem der Ansprüche 1 bis 14, dadurch gekennzeichnet, daß als Monomere Acrylamid, Methacrylnitril, Acrylnitril, Vinylpyridin, Vinylacetat, polymerisationsfähige Säuren und ihre Salze, insbesondere Maleinsäure, Fumarsäure, Itaconsäure, Vinylsulfonsäure, Acrylamidopropansulfonsäure, hydroxygruppenhaltige Ester polymerisationsfähiger Säuren, insbesondere Hydroxyethyl- und Hydroxypropylester der Acryl- und der Methyacrylsäure, aminogruppenhaltige und ammoniumgruppenhaltige Ester und Amide polymerisationsfähiger Säuren, bevorzugt die Dialkylaminoester, insbesondere Dimethyl- und Diethylaminoalkylester der Acryl- und der Methacrylsäure, die Trimethyl- und Triethylammoniumalkylester sowie die entsprechenden Amide allein oder im Gemisch untereinander oder als Comonomere zusammen mit Acrylsäure und/oder Methacrylsäure verwendet werden.

16. Verfahren nach einem der Ansprüche 1 bis 15, dadurch gekennzeichnet, daß zur Polymerisation wasserunlösliche Comonomere, bevorzugt die Ester der Acryl- und/oder Methacrylsäure mit $C_1$ bis $C_{10}$-Alkoholen, Styrol und alkylierte Styrole allein oder im Gemisch untereinander in Mengen von 0 bis kleiner als 40 Gew.-%, bezogen auf das Gesamtgewicht der Monomeren, verwendet werden.

17. Verfahren nach einem der Ansprüche 1 bis 16, dadurch gekennzeichnet, daß vernetzend wirkende Monomere mit mehr als einer polymerisationsfähigen Gruppe, bevorzugt Methylenbisacrylamid, Tetraallyloxiethan, Triallylcyanurat, Allyl(meth)acrylat, Triallylamin, Tetraallylethylendiamin, Ethylenglykoldiacrylat, Butandioldiacrylat allein oder im Gemisch in Mengen von 0 bis 20 Gew.-%, bezogen auf das Gesamtgewicht der Monomeren, eingesetzt werden.

18. Vorrichtung zum Durchführen des Verfahrens gemäß einem der Ansprüche 1 bis 17, mit einem endlosen über Trägerelemente und mindestens zwei Umlenkrollen, von denen mindestens eine angetrieben und eine verstellbar ausgebildet ist, umlaufenden Trägerband und einer Aufgabe- und Dosiereinrichtung für die Reaktionskomponenten, sowie ggfs. Belichtungseinrichtung, die in Transportrichtung des Trägerbandes nach der Aufgabe- und Dosiereinrichtung angeordnet sind, Kühl- und Heizeinrichtungen und einer Abnahmeeinrichtung für den Polymergelstrang, die im Bereich der Umlenkrollen für das Rückführen des Trägerbandes angeordnet ist, dadurch gekennzeichnet, daß im Bereich des oberen Trums (21) des Trägerbandes (2) beidseitig der horizontalen Tragelemente (11), (120), beginnend im Bereich der Aufgabe- und Dosiereinrichtung (1), hochragende Stützelemente (14) vorgesehen sind, deren Längsachsen (140) einander in einem unterhalb des oberen Trums (21) liegenden Schnittpunkt schneiden, und das aufliegende Trägerband entsprechend muldenförmig verformt ist, wobei die Gestalt und Anordnung der Stützelemente (14) längs des oberen Trums (21) eine kontinuierliche Änderung der Muldenform der zu durchlaufenden Wegstrecke in der Weise bestimmen, daß das Ablösen des entstehenden klebrigen Polymerstranges vom Trägerband auf der vorgesehenen Wegstrecke, ausgehend von den Seitenrändern hin zur Mitte der vom Trägerband gebildeten Mulde, durch kontinuierliche Änderung der Muldenform unter der Bedingung Kraft P größer A x F (Kontaktfläche x Klebkraft) erfolgt und wobei mindestens die oberste mit den Reaktionskomponenten in Berührung kommende Schicht des Trägerbandes aus Silikonkautschuk hergestellt ist.

19. Vorrichtung zum Durchführen des Verfahrens gemäß einem der Ansprüche 1 bis 17, mit einem endlosen über Trägerelemente und mindestens zwei Umlenkrollen, von denen mindestens eine angetrieben und eine verstellbar ausgebildet ist, umlaufenden Trägerband und einer Abwicklungs- und Zuführeinrichtung für eine auf der Oberseite des Trägerbandes streckenweise mitführbaren Trennfolie, und einer Aufgabe- und Dosiereinrichtung für die Reaktionskomponenten, sowie ggfs. Belichtungseinrichtung, die in Transportrichtung des Trägerbandes nach der Aufgabe- und Dosiereinrichtung angeordnet sind, Kühl- und Heizeinrichtungen und einer Abnahmeeinrichtung für den Polymergelstrang, die im Bereich der Umlenkrollen für das Rückführen des Trägerbandes angeordnet ist, dadurch gekennzeichnet, daß im Bereich des oberen Trums (21) des Trägerbandes (2) beidseitig der horizontalen Tragelemente (11), (120), beginnend im Bereich der Aufgabe- und Dosiereinrichtung (1), hochragende Stützelemente (14) vorgesehen sind, deren Längsachsen (140) einander in einem unterhalb des oberen Trums (21) liegenden Schnittpunkt schneiden, und das aufliegende Trägerband entsprechend muldenförmig verformt ist, wobei die Gestalt und Anordnung der Stützelemente (14) längs des oberen Trums (21) eine kontinuierliche Änderung der Muldenform der zu durchlaufenden Wegstrecke in der Weise bestimmen, daß das Ablösen des entstehenden klebrigen Polymerstranges vom Trägerband auf der vorgesehenen Wegstrecke, ausgehend von den Seitenrändern hin zur Mitte der vom Trägerband gebildeten Mulde, durch kontinuierliche Änderung der Muldenform unter der Bedingung P größer A x F erfolgt und wobei die mit dem Trägerband mitgeführte Trennfolie aus einem Kunststoff, wie z. B. Polyolefin (Polyethylen, Polypropylen, Polyisobutylen), Polyvinylchlorid, Tri- oder Tetrafluorethylen, Polyamid, Natur-, Silikon- oder synthetischen Kautschuk, Polyesterharz oder imprägniertem Textilgewebe auf Cellulosebasis, wie Zellophan, imprägnierten Papieren oder nicht stark saugfähigen Papieren besteht.

20. Vorrichtung nach Anspruch 18 oder 19 dadurch gekennzeichnet, daß jedes Stützelement (14) von mindestens einer um die Längsachse (140) bewegbaren, insbesondere zylindrischen oder kegeligen Rolle gebildet ist.

21. Vorrichtung nach einem der Ansprüche 18 bis 20, dadurch gekennzeichnet, daß ein in Längs- und Querrichtung biegsames Trägerband vorgesehen ist.

22. Vorrichtung nach einem der Ansprüche 18 bis 21, dadurch gekennzeichnet, daß im Bereich der Stützelemente (14) die Tragelemente (11) und damit die horizontale Transportebene des oberen Trums (21) gegenüber dem horizontalen Ablaufniveau von der Umlenkrolle (5) abgesenkt angeordnet sind.

23. Vorrichtung nach einem der Ansprüche 18 bis 22, dadurch gekennzeichnet, daß im Bereich der Stützelemente (14) parallel zur Ebene der Tragelemente (11) auf den Enden der hochragenden Seitenränder des Trums (21) anliegend mindestens eine Begrenzungsrolle (13) vorgesehen ist.

24. Vorrichtung nach einem der Ansprüche 18 - 20, dadurch gekennzeichnet, daß in Transportrichtung betrachtet vor der Aufgabe- und Dosiereinrichtung (1) mindestens eine Andruckrolle (44), (45) parallel zu den Tragelementen (11), (120) mit einer der Muldenform des Trums (21) angepaßten Gestalt auf der Oberseite des Trägerbandes anliegend angeordnet ist.

25. Vorrichtung nach einem der Ansprüche 18 bis 24, dadurch gekennzeichnet, daß im Bereich des oberen Trums (21) als Tragelemente eine sich in Transportrichtung erstreckende, mit einer durchgehenden Öffnung (121) ausgebildete Führungsschiene (120) vorgesehen ist und das Trägerband (2) auf seiner Unterseite mit hammerkopfartigen Profilstollen, die durch die Öffnung (121) der Führungsschiene geführt sind, ausgerüstet ist.

26. Vorrichtung nach einem der Ansprüche 18 bis 25, dadurch gekennzeichnet, daß mindestens eine Stachelwalze (40) und /oder Andruckrollenpaar aus einem gegen die Reaktionskomponenten chemisch resistenten Material der Abnahmestelle (50) des Polymergelstranges (10) von dem Trägerband nachgeordnet sind.

**Claims**

1. A process for the continuous production of polymers and copolymers of water-soluble monomers, optionally with additional comonomers, by polymerizing an aqueous monomer solution comprising 2.2 - 8.3 moles of polymerizable double bonds per kilo of monomer solution, and, optionally, catalysts and/or photoinitiators, at a temperature in the range of about -10°C to 120°C, the liquid reaction components being applied as a layer having a thickness of at least 1 cm on a moving endless conveyor belt and polymerized, characterized in that the liquid reaction components are fed into a trough continuously formed by the moving conveyor belt, and that the trough-like shape of the conveyor belt is continuously changed to an extended, flat profile during the polymerization of the reaction components, and that the resulting polymer gel strand is continuously released from the side edges towards the centre of the trough formed by the conveyor belt, as the curved trough-like shape of the conveyor belt changes to the extended, flat form, the release taking place under the condition force P is greater than A • F (contact surface x adhesive force) and the liquid reaction components being applied on a release sheet carried along with the conveyor belt and made of a plastic material, such as polyolefin (polyethylene, polypropylene, polyisobutylene), polyvinyl chloride, tri- or tetrafluoroethylene, polyamide, natural rubber, silicone rubber, or synthetic rubber, polyester resin, or impregnated textile fabric, or films based on cellulose, such as cellophane, impregnated papers, low-absorption papers.

2. A process for the continuous production of polymers and copolymers of water-soluble monomers, optionally with additional comonomers, by polymerizing an aqueous monomer solution comprising 2.2 - 8.3 moles of polymerizable double bonds per kilo of monomer solution, and, optionally, catalysts and/or photoinitiators, at a temperature in the range of about -10°C to 120°C, the liquid reaction components being applied as a layer having a thickness of at least 1 cm on a moving endless conveyor belt and polymerized, characterized in that the liquid reaction components are fed into a trough continuously formed by the moving conveyor belt, and that the trough-like shape of the conveyor belt is continuously changed to an extended and flat profile during the polymerization of the reaction components, and that the resulting polymer gel strand is continuously released from the side edges towards the centre of the trough formed by the conveyor belt, as the curved trough-like shape of the conveyor belt changes to the extended, flat form, the release taking place under the condition P is greater than A • F and a conveyor belt being used wherein at least the uppermost layer that comes into contact with the reaction components is made of silicone rubber.

3. The process according to claim 1 or 2 characterized in that the momoner solution is continuously metered into the trough formed by the conveyor belt to a layer thickness of at least 2 cm, preferably more than 6 cm, and the polymer gel strand that is formed assumes the shape of the trough during the polymerization process.

4. The process according to any one of claims 1 to 3 characterized in that the polymerization is carried out within 60 minutes, preferably within 10 to 30 minutes.

5. The process according to any one of claims 1 to 4 characterized in that the pH-value of the monomer solution is in a range of below 10, preferably between 2 and 7, and most preferably between 3.5 to 5.0.

6. The process according to any one of claims 1 to 5 characterized in that a conveyor belt is used that is flexible at least in partial sections and adaptable to the desired trough-like shape during the polymerization process.

7. The process according to claim 1 characterized in that the release sheet based on cellulose or plastic material and the polymer gel strand produced thereon are together subjected to further processing and said sheet becomes a component of the polymer that is produced.

8. The process according to any one of claims 1 to 7 characterized in that in order to form the trough-like shape, the side edges of the conveyor belt are bent upwardly from the horizontal plane forward of the area in which the reaction components are introduced.

9. The process according to any one of claims 1 to 8 characterized in that the level of the conveyor belt in the region in which the trough is formed, particularly in the area where the reaction components are added, is lowered relative to the preceding level of the approaching flat conveyor belt.

10. The process according to any one of claims 1 to 9 characterized in that the trough formed by the conveyor belt is sealed off forwardly of the area in which the reaction components are metered, relative to the transport direction of the conveyor belt.

11. The process according to any one of claims 1 to 10 characterized in that thickening agents that are either natural and/or synthetic based, such as alginates, carboxymethylcellulose, polyvinyl alcohol, high-molecular polymers based on acrylic acid derivatives, such as mono- and copolymers of acrylamide, acrylic acid, acrylonitrile, or of ethylene oxide are added to the monomer solution.

12. The process according to any one of claims 1 to 11 characterized in that a monomer solution having a viscosity in the range of 5 to 5000 mPa.s, preferably from 10 to 200 mPa.s is used.

13. The process according to any one of claims 1 to 12 characterized in that the polymerization of the monomer solution is initiated by means of UV-light with the use of photoinitiators, preferably of benzil or benzoin derivatives, and/or by chemical catalyst systems.

14. The process according to any one of claims 1 to 13 characterized in that acrylic acid and/or methacrylic acid are used as monomers.

15. The process according to any one of claims 1 to 14 characterized in that acrylamide, methacrylonitrile, acrylonitrile, vinyl pyridine, vinyl acetate, polymerizable acids and their salts, in particular maleic acid, fumaric acid, itaconic acid, vinyl sulfonic acid, acrylamidopropane sulfonic acid, hydroxy group-containing esters of polymerizable acids, in particular hydroxyethyl and hydroxypropyl esters of acrylic and methacrylic acid, amino group-containing and ammonium group-containing esters and amides of polymerizable acids, preferably the dialkylaminoesters, in particular dimethyl and diethylaminoalkylesters of acrylic and methacrylic acid, trimethyl and triethylammonium alkyl esters, as well as the corresponding amides alone or in admixture with one another or as comonomers together with acrylic acid and/or methacrylic acid are used as monomers.

16. The process according to any one of claims 1 to 15 characterized in that for the polymerization water-insoluble comonomers, preferably the esters of acrylic and/or methacrylic acid with $C_1$ to $C_{10}$-alcohols, styrene and alkylated styrenes alone or in admixture with one another, are used in amounts of 0 to less than 40%-wt., relative to the total weight of the monomers.

17. The process according to any one of claims 1 to 16 characterized in that cross-linking monomers with more than one polymerizable group, preferably methylene bisacrylamide, tetraallyloxyethane, triallyl cyanurate, allyl-(meth)acrylate, triallylamine, tetraallylethylene diamine, ethylene glycol diacrylate, butanediol diacrylate alone or in admixture, are used in amounts of 0 to 20%-wt., relative to the total weight of the monomers.

18. A device for carrying out the process according to any one of claims 1 to 17 with an endless conveyor belt traveling via supporting elements and at least two guide rollers of which at least one is driven and one is adjustable, and a delivery and metering means for the reaction components, and optionally an irradiation means located after the feeding and metering means, relative to the direction of travel of the conveyor belt, cooling and heating means, and a take-off means for the polymer gel strand, which is located in the region of the guide rollers for the return of the conveyor belt, characterized in that in the region of the upper run (21) of the conveyor belt (2) on both sides of the horizontal supporting elements (11), (120), beginning in the region of the feeding and metering means (1), upwardly extending support elements (14) are provided whose longitudinal axes (140) intersect one another at a point below the upper run (21) and that the supported conveyor belt is correspondingly formed into a trough, wherein the form and arrangement of said support elements (14) along the upper run (21) define a continuous change of the trough shape along the distance to be passed in such a manner that the release of the resulting tacky polymer strand from the conveyor belt on the selected distance, beginning from the side edges towards the centre of the trough formed by the conveyor belt, is effected by the continuous change of the trough shape under the condition force P is greater than A x F (contact surface x adhesive force), and wherein at least the uppermost layer of the conveyor belt, which comes into contact with the reaction components, is made of silicone rubber.

19. A device for carrying out the process according to any one of claims 1 to 17 with an endless conveyor belt travelling via supporting elements and at least two guide rollers of which at least one is driven and one is adjustable, and an unwinding and feeding means for the release sheet that can be carried along on sections of the upper surface of the conveyor belt, and a delivery and metering means for the reaction components, and optionally an irradiation means located after the feeding and metering means, relative to the direction of travel of the conveyor belt, cooling and heating means, and a take-off means for the polymer gel strand, which is located in the region of the guide rollers for the return of the conveyor belt, characterized in that in the region of the upper run (21) of the conveyor belt (2) on both sides of the horizontal supporting elements (11), (120), beginning in the region of the feeding and metering means (1), upwardly extending support elements (14) are provided whose longitudinal axes (140) intersect one another at a point below the upper run (21) and that the supported conveyor belt is correspondingly formed into a trough, wherein the form and arrangement of said support elements (14) along the upper run (21) define a continuous change of the trough shape along the distance to be passed in such a manner that the release of the resulting tacky polymer strand from the conveyor belt on the selected distance, beginning from the side edges towards the centre of the trough formed by the conveyor belt, is effected by the continuous change of the trough shape under the condition force P is greater than A x F, and wherein the release sheet carried along by the conveyor belt consists of a plastic material, such as polyolefin (polyethylene, polypropylene, polyisobutylene), polyvinyl chloride, tri- or tetrafluoroethylene, polyamide, natural rubber, silicone rubber, or synthetic rubber, polyester resin, or impregnated textile fabric based on cellulose, such as cellophane, impregnated papers, or low-absorption papers.

20. The device according to claim 18 or 19 characterized in that each supporting element (14) is formed by at least one, particularly cylindrical or conical roll rotatable around the axis (140).

21. The device according to any one of claims 18 to 20 characterized in that a conveyor belt which is flexible in the lengthwise and crosswise direction is provided.

22. The device according to any one of claims 18 to 21 characterized in that, in the region of the supporting elements (14), the support elements (11) and therewith the horizontal conveying plane of the upper run (21) are arranged to be lowered relative to the horizontal discharge level of the guide roll (5).

23. The device according to any one of claims 18 to 22 characterized in that at least one limiting roll (13) is provided in the region of the supporting elements (14), parallel to the plane of the support elements (11) on the ends of the upwardly extending side edges of the run (21).

24. The device according to any one of claims 18 to 20 characterized in that ahead of the charging and metering means (1), considered with respect to the direction of travel, at least one pressure roller (44), (45) having a shape adapted to the trough shape of the run (21) is located parallel to the support elements (11), (120), close-lying on the upper surface of the conveyor belt.

25. The device according to any one of claims 18 to 24 characterized in that in the region of the upper run (21) there is provided a guide rail (120) which serves as support and extends in the transport direction and is provided with an opening (121) therethrough, and that the conveyor belt (2) on its underside is provided with hammer-head profiled projections which are guided through the opening (121) of the guide rail.

26. The device according to any one of claims 18 to 25 characterized in that at least one toothed or spiked roller (40) and/or a pair of pressure rollers are located behind the take-off point (50) of the polymer gel strand (10) from the conveyor belt, the rollers being made of a material which is chemically resistant to the reaction components.

## Revendications

1. Procédé pour la préparation en continu de polymères et copolymères à partir de monomères hydrosolubles et, le cas échéant, d'autres comonomères par polymérisation des monomères en solution aqueuse contenant 2,2-8,3 moles de liaisons doubles polymérisables par kilo de solution de monomères ainsi que, le cas échéant, des catalyseurs et/ou des photoamorceurs, dans une plage de températures d'environ -10 à 120°C, les composants réactionnels fluides étant déposés sous forme d'une couche de minimum 1 cm d'épaisseur sur une bande transporteuse sans fin, où ils sont polymérisés, caractérisé en ce que les composants réactionnels fluides sont déposés dans une sorte de cuvette formée en continu par la bande transporteuse et en ce que, pendant la polymérisation des composants réactionnels, la forme en cuvette de la bande transporteuse se transforme progressivement en une bande plate étalée et le boudin de gel de polymère qui se forme se détache progressivement des bords latéraux vers le milieu de la cuvette formée par la bande transporteuse pendant que la bande transporteuse passe de façon continue de sa forme incurvée dans la forme de bande plane étalée, la séparation se faisant sous la condition que la force P est supérieure à A • F (surface de contact x force d'adhérence), les composants réactionnels fluides étant déposés sur un film de séparation entraîné par la bande transporteuse et constitué d'un matériau plastique tel que, par exemple, polyoléfine (polyéthylène, polypropylène, polyisobutylène), poly(chlorure de vinyle), trifluoroéthylène ou tétrafluoroéthylène, polyamide, silicone naturel ou caoutchouc synthétique, résine de polyester ou tissu imprégné ou des films à base de cellulose tels que cellophane, papiers imprégnés, papiers peu absorbants.

2. Procédé pour la préparation en continu de polymères et copolymères à partir de monomères hydrosolubles et, le cas échéant, d'autres comonomères par polymérisation des monomères en solution aqueuse contenant 2,2-8,3 moles de liaisons doubles polymérisables par kilo de solution de monomères ainsi que, le cas échéant, des catalyseurs et/ou des photoamorceurs, dans une plage de températures d'environ -10 à 120 °C, les composants réactionnels fluides étant déposés sous forme d'une couche de minimum 1 cm d'épaisseur sur une bande transporteuse sans fin, où ils sont polymérisés, caractérisé en ce que les composants réactionnels fluides sont déposés dans une sorte de cuvette formée en continu par la bande transporteuse et en ce que, pendant la polymérisation des composants réactionnels, la forme en cuvette de la bande transporteuse se transforme progressivement en une bande plate étalée et le boudin de gel de polymère qui se forme se détache progressivement des bords latéraux vers le milieu de la cuvette formée par la bande transporteuse pendant que la bande transporteuse passe de façon continue de sa forme incurvée dans la forme de bande plane étalée, la séparation se faisant sous la condition que la force P est supérieure à A • F, au moins la couche supérieure de la bande employée, qui entre en contact avec les composants réactionnels, étant constituée de caoutchouc siliconé.

3. Procédé suivant la revendication 1 ou 2, caractérisé en ce que la solution de monomères est dosée en continu dans la cuvette formée par la bande transporteuse de façon à y former une couche d'une épaisseur d'au moins 2 cm, de préférence supérieure à 6 cm, et en ce que le boudin de gel de polymère produit pendant la polymérisation épouse la forme de la cuvette.

4. Procédé suivant l'une quelconque des revendications 1 à 3, caractérisé en ce que la polymérisation est réalisée en l'espace de 60 minutes, de préférence en l'espace de 10 à 30 minutes.

5. Procédé suivant l'une quelconque des revendications 1 à 4, caractérisé en ce que le pH de la solution de monomères se situé dans une plage inférieure à 10, de préférence entre 2 et 7 et plus préférentiellement entre 3,5 et 5,0.

6. Procédé suivant l'une quelconque des revendications 1 à 5, caractérisé en ce qu'on emploie une bande transporteuse qui, au moins dans certaines zones, est flexible et prend la forme de cuvette souhaitée pendant la phase de polymérisation.

7. Procédé suivant la revendication 1, caractérisé en ce que le film de séparation à base de cellulose ou de matière plastique est soumis avec le boudin de gel aux opérations subséquentes et est intégré au polymère produit.

8. Procédé suivant l'une quelconque des revendications 1 à 7, caractérisé en ce que, pour réaliser la forme en cuvette, les bords latéraux de la bande transporteuse se trouvant dans un plan horizontal sont relevés avant d'arriver dans la zone de dosage des composants réactionnels.

9. Procédé suivant l'une quelconque des revendications 1 à 8, caractérisé en ce que, dans la zone de formation de la cuvette, en particulier dans la zone de dosage des composants réactionnels, le niveau de la bande transporteuse est abaissé par rapport au niveau de la bande transporteuse dans la zone précédente où elle est encore plane.

10. Procédé suivant l'une quelconque des revendications 1 à 9, caractérisé en ce que la cuvette de la bande transporteuse est rendue étanche dans la direction de transport avant la zone de dosage des composants réactionnels.

11. Procédé suivant l'une quelconque des revendications 1 à 10, caractérisé en ce qu'on ajoute à la solution de monomères des additifs épaississants d'origine naturelle et/ou synthétique tels que des alginates, la carboxy-méthyl-cellulose, un alcool polyvinylique, des polymères à haut poids moléculaire à base de dérivés de l'acide acrylique, comme des monopolymères et des copolymères de l'acide ou de l'amide acrylique, du nitrile acrylique ou de l'oxyde d'éthylène.

12. Procédé suivant l'une quelconque des revendications 1 à 11, caractérisé en ce qu'on emploie une solution de monomères ayant une viscosité se situant dans la plage de 5 à 5000 mPa.s, de préférence de 10 à 200 mPa.s.

13. Procédé suivant l'une quelconque des revendications 1 à 12, caractérisé en ce qu'on amorce la polymérisation de la solution de monomères à l'aide de lumière UV en présence de photoamorceurs, de préférence de dérivés du benzile ou de la benzoïne, et/ou de systèmes catalytiques chimiques.

14. Procédé suivant l'une quelconque des revendications 1 à 13, caractérisé en ce qu'on emploie comme monomères de l'acide acrylique et/ou de l'acide méthacrylique.

15. Procédé suivant l'une quelconque des revendications 1 à 14, caractérisé en ce qu'on emploie comme monomères de l'amide acrylique, du nitrile méthacrylique, du nitrile acrylique, de la vinylpyridine, de l'acétate de vinyle, des acides polymérisables et leurs sels, en particulier l'acide maléique, l'acide fumarique, l'acide itaconique, l'acide vinyl-sulfonique et l'acide acrylamido-propane-sulfonique, des esters à groupes hydroxyle d'acides polymérisables, en particulier l'ester hydroxyéthylique ou l'ester hydroxypropylique de l'acide acrylique et de l'acide méthacrylique, les amides et esters à groupe amino ou ammonium d'acides polymérisables, de préférence les esters du type dialkyl-amino, plus particulièrement les (méth)-acrylates de diméthyl- et diéthylaminoalkyle, les esters triméthyl- et triéthylammonium alkyliques, ainsi que les amides correspondants, seuls ou en mélange ou en tant que comonomères conjointement avec l'acide acrylique et/ou l'acide méthacrylique.

16. Procédé suivant l'une quelconque des revendications 1 à 15, caractérisé en ce qu'on emploie pour la polymérisation des comonomères insolubles dans l'eau, de préférence les esters de l'acide acrylique et/ou de l'acide méthacrylique avec des alcools en $C_1$ à $C_{10}$, du styrène et de styrènes alkylés, seuls ou en mélange, en proportion de 0 à moins de 40% du poids total de monomères.

17. Procédé suivant l'une quelconque des revendications 1 à 16, caractérisé en ce que l'on met en oeuvre des monomères à effet réticulant comportant plus d'un groupe polymérisable, de préférence le méthylène de bis-acryl-amide, le tétra-allyl-oxyéthane, le cyanurate de triallyle, le (méth)acrylate d'allyle, la triallylamine, la tétraallyléthylène-diamine, le diacrylate d'éthylène-glycol, le diacrylate de butane-diol, seuls ou en mélange, en proportion de 0 à 20% du poids total de monomères.

18. Installation pour la mise en oeuvre du procédé suivant l'une des revendications 1 à 17, comprenant une bande transporteuse sans fin placée sur des organes de support et au moins deux poulies de renvoi, dont l'une au moins est entraînée et une autre est réglable, un dispositif d'introduction et de dosage des composants réactionnels, ainsi que, le cas échéant, un dispositif d'éclairement, disposé en aval du dispositif d'introduction et de dosage, des dispositifs de chauffage et de refroidissement et un dispositif d'évacuation du boudin de gel de polymère disposé dans la région des poulies de renvoi de la bande transporteuse, caractérisée en ce que, dans la zone du brin supérieur (21) de la bande transporteuse (2), des deux côtés des organes porteurs horizontaux (11), (120), des éléments de soutien montants (14) sont disposés à partir de la zone d'introduction et de dosage (1), dont les axes longitudinaux (140) se coupent en un point d'intersection situé en dessous du brin supérieur (21) et qui provoquent la déformation en cuvette de la bande transporteuse qui s'y appuie, la forme et la disposition des éléments de soutien (14) le long du brin supérieur (21) déterminant une modification continue de la cuvette le long du chemin à parcourir telle que la séparation du boudin collant de polymère formé qui se détache progressivement de la bande transporteuse le long du chemin parcouru, des bords latéraux vers le milieu de la cuvette formée par la bande transporteuse, a lieu du fait de la modification continue de la forme de la cuvette sous la condition que la force P soit supérieure à A x F (surface de contact x force d'adhérence) et au moins la couche supérieure de la bande transporteuse, entrant en contact avec les composants réactionnels, étant constituée d'un caoutchouc siliconé.

19. Installation pour la mise en oeuvre du procédé suivant l'une des revendications 1 à 17, comprenant une bande transporteuse sans fin placée sur des organes de support et au moins deux poulies de renvoi, dont l'une au moins est entraînée et une autre est réglable, et un dispositif de déroulement et d'amenée d'un film de séparation pouvant être entraîné en certains endroits sur la face supérieure de la bande transporteuse et un dispositif d'alimentation et de dosage des composants réactionnels, ainsi que, le cas échéant, un dispositif d'éclairement, disposé en aval du dispositif d'introduction et de dosage, des dispositifs de chauffage et de refroidissement et un dispositif d'évacuation du boudin de gel de polymère disposé dans la région des poulies de renvoi de la bande transporteuse, caractérisée en ce que dans la zone du brin supérieur (21) de la bande transporteuse (2), des deux côtés des organes porteurs horizontaux (11), (120), des éléments de soutien montants (14) sont disposés à partir de la zone d'introduction et de dosage (1), dont les axes longitudinaux (140) se coupent en un point d'intersection situé en dessous du brin supérieur (21) et qui provoquent la déformation en cuvette de la bande transporteuse qui s'y appuie, la forme et la disposition des éléments de soutien (14) le long du brin supérieur (21) déterminant une modification continue de la cuvette le long du chemin à parcourir telle que la séparation du boudin collant de polymère formé qui se détache progressivement de la bande transporteuse le long du chemin parcouru, des bords latéraux vers le milieu de la cuvette formée par la bande transporteuse, a lieu du fait de la modification continue de la cuvette sous la condition que la force P soit supérieure à A x F et le film de séparation entraîné par la bande transporteuse étant constitué d'un matériau plastique tel que, par exemple, polyoléfine (polyéthylène, polypropylène, polyisobutylène), poly(chlorure de vinyle), trifluoroéthylène ou tétrafluoroéthylène, polyamide, silicone naturel ou caoutchouc synthétique, résine de polyester ou tissu imprégné ou des films à base de cellulose tels que cellophane, papiers imprégnés, papiers peu absorbants.

20. Installation suivant la revendication 18 ou 19, caractérisée en ce que chaque élément de support (14) est constitué d'au moins un rouleau mobile autour de l'axe longitudinal (140), en particulier cylindrique ou conique.

21. Installation suivant l'une quelconque des revendications 18 à 20, caractérisée en ce qu'on utilise une bande transporteuse flexible en direction longitudinale et transversale.

22. Installation suivant l'une quelconque des revendications 18 à 21, caractérisée en ce que, dans la zone des éléments de support (14), les organes de support (11) et donc le plan horizontal de transport du brin supérieur (21) se situent à un niveau inférieur par rapport au niveau de dévidement horizontal de la poulie de renvoi (5).

23. Installation suivant l'une quelconque des revendications 18 à 22, caractérisée en ce que, dans la zone des éléments de support (14), au moins un rouleau limiteur (13) est prévu parallèlement au plan des organes de support (11) et s'appuie sur les arêtes des bords latéraux ascendants du brin supérieur (21).

24. Installation suivant l'une quelconque des revendications 18 à 20, caractérisée en ce que, vu dans la direction de transport, au moins un rouleau de serrage (44), (45), dont la forme est adaptée à la forme en cuvette du brin supérieur (21), est disposé parallèlement aux organes de support (11), (120) en amont du dispositif d'introduction et de dosage et s'appuie sur la face supérieure de la bande transporteuse.

25. Installation suivant l'une quelconque des revendications 18 à 24, caractérisée en ce que, dans la zone du brin supérieur (21), les organes de support sont constitués d'un rail de guidage (120) s'étendant dans la direction de transport et pourvu d'une ouverture continue (121) et la bande transporteuse (2) est pourvue à sa face inférieure d'éléments profilés en forme de tête de marteau, qui sont guidés par l'ouverture (121) dans le rail de guidage.

26. Installation suivant l'une quelconque des revendications 18 à 25, caractérisée en ce qu'au moins un cylindre à pointes (40) et/ou une paire de rouleaux de serrage en un matériau chimiquement résistant vis-à-vis des composants de réaction est disposé en aval du point d'enlèvement (50) du boudin de gel de polymère (10) de la bande transporteuse.

FIG. 1

FIG. 2

FIG. 3

# FIG. 4

# FIG. 5

FIG. 6

FIG. 7

FIG. 8

EP 0 228 638 B1

FIG. 9

FIG. 10

EP 0 228 638 B1

FIG. 11